(19) Europäisches Patentamt
European Patent Office
Office européen des brevets

(11) **EP 4 201 982 A1**

(12) **EUROPEAN PATENT APPLICATION**
published in accordance with Art. 153(4) EPC

(43) Date of publication:
**28.06.2023 Bulletin 2023/26**

(21) Application number: **21858237.7**

(22) Date of filing: **11.08.2021**

(51) International Patent Classification (IPC):
**C08J 5/18** (2006.01)    **B32B 27/32** (2006.01)
**B65D 65/40** (2006.01)    **C08L 23/10** (2006.01)
**C08L 83/10** (2006.01)

(52) Cooperative Patent Classification (CPC):
**B32B 27/32; B65D 65/40; C08J 5/18; C08L 23/10;
C08L 83/10**

(86) International application number:
**PCT/JP2021/029666**

(87) International publication number:
**WO 2022/039090 (24.02.2022 Gazette 2022/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.08.2020 JP 2020140435**

(71) Applicant: **TOYOBO CO., LTD.**
**Osaka-shi**
**Osaka 5300001 (JP)**

(72) Inventor: **FUJINO Hidetoshi**
**Inuyama-shi Aichi 484-8508 (JP)**

(74) Representative: **Vossius & Partner**
**Patentanwälte Rechtsanwälte mbB**
**Siebertstraße 3**
**81675 München (DE)**

(54) **SEALANT FILM**

(57)    [PROBLEMS] It is an object of the present invention to provide a film that enables easy removal of even viscous contents from a packaging bag, has sufficient heat-sealability, and high easy-peelability, and a packaging bag comprising the film.

[SOLUTIONS] A sealant film, comprising a sealing layer including a resin composition comprising (a) and (b), and satisfying the following (1) and (2): (a) a polypropylene resin, (b) a silicon containing polyolefin resin, (1) the ratio of a sealing strength at a sealing temperature of 200°C and a sealing pressure of 0.4 MPa to the sealing strength at a sealing temperature of 150°C and a sealing pressure of 0.4 MPa is 2 or less, (2) the sealing strength at a sealing temperature of 150°C and a sealing pressure of 0.6 MPa is 40 N/15mm or less.

[Fig. 1]

Si level in sealing layer (Si/C) and Si level on surface of sealing layer (Si/C)

EP 4 201 982 A1

**Description**

TECHNICAL FIELD

The present invention relates to a sealant film and a laminate comprising the film. Specifically, the present invention relates to a sealant film with high liquid repellency and increased heat sealability as well as improved slipperiness and high anti-blocking properties, a laminate and a packaging bag comprising the film.

BACKGROUND ART

Packaging bags made from plastic film are lightweight and highly airtight, has transparency and high strength, and also provides a high handleability, therefore, such packaging bags are widely used for packaging of foods and chemicals in the forms of a solid, a liquid, powder, a paste, viscous products and mixtures thereof.

However, in the removal of foods and chemicals from packaging bags, the contents with viscosity in the form of a liquid, a paste, or the contents of other viscose products tend to attach the inner surface of packaging bags, and it is empirically apparent that the removal of such contents is not easy. In addition, the disposal of the packaging bag with the contents attached inner surface may cause a problem from a sanitation aspect.

Although PTL 1 and 2 disclose the film coated with a surfactant on its surface or the film kneaded with a surfactant to solve these problems, the contents are not easily removed, in addition to the problem of decreased heat-sealing strength.

PTL 3 and 4 disclose the films with improved liquid repellency by containing silicone resin or silicone oil, however, the liquid repellency of the films is not sufficient.

The films disclosed in PTL 5, 6, and 7 include silicon containing polyolefin, and thus have improved liquid repellency.

Although PTL 8 discloses the film with easy-peelability by mixing polyethylene resin with polypropylene resin, the liquid repellency is not sufficient.

CITATION LIST

PATENT LITERATURE

PTL 1: JP-A-2000-355362
PTL 2: JP-A-2001-48229
PTL 3: JP-A-H08-337267
PTL 4: JP-B2-3539723
PTL 5: JP-B2-5990131
PTL 6: JP-A-2014-177541
PTL 7: JP-A-2015-024548
PTL 8: JP-B2-5394096

SUMMARY OF THE INVENTION

PROBLEMS TO BE SOLVED BY THE INVENTION

The present invention is based on the above technical background, and it is an object of the present invention to provide a film that enables easy removal of even viscous contents from a packaging bag, has sufficient heat-sealability and high easy-peelability, and/or provide a packaging bag comprising the film.

SOLUTION TO THE PROBLEMS

It has been found by the present inventors that the problems could be solved by resin composition comprising a polypropylene resin and silicon containing polyolefin, and controlling temperature dependence of the heat-sealing strength of a layer including the resin composition to a specific range.

The present invention relates to a sealant film, comprising a sealing layer including a resin composition comprising (a) and (b), and satisfying the following (1) and (2):

(a) a polypropylene resin,

(b) a silicon containing polyolefin resin,

(1) the ratio of a sealing strength at a sealing temperature of 200°C and a sealing pressure of 0.4 MPa to the sealing strength at a sealing temperature of 150°C and a sealing pressure of 0.4 MPa is 2 or less,

(2) the sealing strength at a sealing temperature of 150°C and a sealing pressure of 0.6 MPa is 40 N/15mm or less.

In this case, the silicon containing polyolefin represented by the following formula:

$$CH_3-(CH_2)_{n-2}-CH_2-Si(CH_3)_2O-(-Si(CH_3)_2-O-)_d-Si(CH_3)_2-CH_2-(CH_2)_{n-2}-CH_3$$

wherein, d is an integer of 1 or more.

Also, in these cases, the resin composition further comprises preferably particles consisting of an inorganic oxide or a synthetic resin.

Further, in these cases, the resin composition further comprises preferably a fatty acid ester or a fatty acid amide.

Also, in these cases, the sealant film described above is preferably satisfying the following (3) and (4):

(3) the abundance ratio of a silicon atom $S_i$ to a carbon atom C (SJC) in the sealing layer is 0.001 or more and 0.02 or less,

(4) the abundance ratio of a silicon atom $S_i$ to a carbon atom C (SJC) on the surface of the sealing layer is 0.05 or more and 0.2 or less.

Further, in these cases, the sealant film described above is preferably satisfying the following (5):

(5) the ratio of the abundance ratio of Si/C in the sealing layer to the abundance ratio Si/C on the surface of the sealing layer is 2 or more.

Further, in these cases, the surface of the sealing layer preferably has a degree of blocking of 200 mN/70mm or less.

Further, a laminate, comprising a substrate film and the sealant film described above is preferable.

ADVANTAGEOUS EFFECTS OF THE INVENTION

The present invention provides the packaging bag from which contents with viscosity in the form of a paste, or other viscose products can be easily removed, the sealant film with increased heat-sealability, high slipperiness and improved anti-blocking properties, and high easy-peelability, and also the laminate comprising the film.

BRIEF DESCRIPTION OF THE DRAWINGS

[FIG. 1] Fig.1 is a graph showing values of average Si level and surface Si level of the films in Comparative Examples 1 and 4 and Examples 2 to 4, and 13.

[FIG. 2] Fig. 2 is a schematic diagram illustrating the evaluation process of liquid repellency.

[FIG. 3] Fig. 3 is a mapping image by EDX of the surface of the film.

[FIG. 4] Fig. 4 is an image by observing a cross-section of the film with TEM.

[FIG. 5] Fig. 5 is an image of the nozzle area of a die of an extruder.

MODE FOR CARRYING OUT THE INVENTION

(Sealing layer)

The resin composition forming the sealing layer of the present invention needs to comprise (a) a polypropylene resin and (b) a silicon containing polyolefin resin.

(Polypropylene resin)

The polypropylene resin for the present invention is a homopolymer of a propylene monomer, a random copolymer of a propylene monomer and $\alpha$-olefin, a block copolymer of a propylene monomer and $\alpha$-olefin, and/or a mixture thereof. Examples of the $\alpha$-olefin include ethylene, buten-1, pentene-1, hexene-1, 3-methylbutene-1, 4-methyl-pentene-1, octene-1, and decene-1.

The polypropylene resin is preferably a homopolypropylene or a polypropylene random copolymer, and more preferably polypropylene/α-olefin random copolymer that is a random copolymer of 85 weight% or more of propylene and 15 weight% or less of α-olefin.

The polypropylene random copolymer may be produced from α-olefin monomers such as ethylene, buten-1, pentene-1, 4-methyl-pentene-1, hexene-1, and octene-1, and ethylene and buten-1 are particularly preferable in terms of productivity. At least one or more types of α-olefins may be preferable for the copolymerization, and two or more types of α-olefins in the form of a mixture may be preferable, if needed.

The polypropylene resin preferably has a peak temperature in melting of 130°C or higher.

The melting point is measured by the method described in Examples. The peak temperature in melting of 130°C or higher of the polypropylene resin enables the shape of the package product not to be deformed easily, smooth conveyance of the film in high-speed packaging process, and the manufactured packaging bag will have less wrinkles. In addition, the packaging bag can be subjected to retorting or semi-retorting process.

The lower limit of the density of the polypropylene resin is preferably 880 kg/cm$^3$, and more preferably 885 kg/cm$^3$. The density of 880 kg/cm$^3$ or more is preferable to attain both of the heat resistance and heat sealability. The upper limit of the density of the polypropylene resin added to the sealing layer is preferably 920 kg/cm$^3$, and more preferably 900 kg/cm$^3$. The density of 920 kg/cm$^3$ or less is preferable to attain both of the heat resistance and heat sealability.

The lower limit of the melt flow rate (MFR) of the polypropylene resin is preferably 2.0 g/10min, more preferably 2.5 g/10min, and further preferably 2.7 g/lOmin. MFR of 2.0 g/10min or more will enables the polypropylene resin and the polyethylene resin to be finely dispersed without phase separation, therefore, that will not lead to significant decrease in peeling strength of the sealing layers after heat-sealing.

The upper limit of MFR of the polypropylene resin is preferably 10.0 g/10min, more preferably 8.0 g/lOmin, and further preferably 7.0 g/lOmin. MFR of 10.0 g/10min or less will enables the polypropylene resin and the polyethylene resin to be finely dispersed without becoming compatible, therefore, that will not lead to significant decrease in peeling strength of the sealing layers after heat-sealing.

(Silicon containing polyolefin resin)

The silicon containing polyolefin resin (that has a polyolefin structure and a silicon structure, and can be referred to as a silicon containing functionalized polyolefin resin) for the present invention is produced by the reaction of a silicon containing compound having 2 or more SiH groups in its molecule and a vinyl group containing compound that is a polymer of at least one type of olefin selected from the group consisting of ethylene, propylene, 1-butene, 1-pentene, and 1-hexene and has a vinyl group at its terminal.

Examples of the silicon containing compound having 2 or more SiH groups include methylhydrogenpolysiloxane represented by Formula (1), and compounds in which some or all the methyl groups in Formula (1) are replaced by an ethyl group, a propyl group, a phenyl group, and a trifluoropropyl group.

Formula (1):  $(CH_3)_3SiO-(-SiH(CH_3)-O-)_a-Si(CH_3)_3$

(In Formula (1), a is an integer of 2 or more. The upper limit of a is preferably 1000, more preferably 300, and further preferably 50.)

Other examples of the silicon containing compound having 2 or more S$_i$H groups include dimethylsiloxane-methylhydrogensiloxane copolymer represented by Formula (2), and compounds in which some or all the methyl groups in Formula (2) are replaced by an ethyl group, a propyl group, a phenyl group, and a trifluoropropyl group.

Formula (2):  $(CH_3)_3SiO-(-Si(CH_3)_2-O-)_b-(-SiH(CH_3)-O-)_c-Si(CH_3)_3$

(In Formula (2), b is an integer of 1 or more, c is an integer of 2 or more, and the upper limit of the sum of b and c is preferably 1000, more preferably 300, and further preferably 50.)

In Formula (2), the order of the unit of -Si(CH$_3$)$_2$-O- and the unit of -SiH(CH$_3$)-O- is not particularly limited, and the units may be in blocks, in disorder, or statistically at random.

Still other examples of the silicon containing compound having 2 or more SiH groups include methylhydrogenpolysiloxane represented by Formula (3), and compounds in which some or all the methyl groups in Formula (3) are replaced by an ethyl group, a propyl group, a phenyl group, and a trifluoropropyl group.

Formula (3):  $HSi(CH_3)_2O-(-Si(CH_3)_2-O-)_d-Si(CH_3)_2H$

(In Formula (3), d is an integer of 1 or more. The upper limit of d is preferably 1000, more preferably 300, and further preferably 50.)

More specifically, such compounds are exemplified by the compounds in which the structures corresponding to the number average molecular weight are as follows, however, the present invention is not limited to these examples.

$$HSi(CH_3)_2O\text{-}(\text{-}Si(CH_3)_2\text{-}O\text{-})_5\text{-}Si(CH_3)_2H$$

$$HSi(CH_3)_2O\text{-}(\text{-}Si(CH_3)_2\text{-}O\text{-})_8\text{-}Si(CH_3)_2H$$

$$HS_i(CH_3)_2O\text{-}(\text{-}S_i(CH_3)_2\text{-}O\text{-})_{18}\text{-}S_i(CH_3)_2H$$

$$HS_i(CH_3)_2O\text{-}(\text{-}S_i(CH_3)_2\text{-}O\text{-})_{80}\text{-}S_i(CH_3)_2H$$

$$HS_i(CH_3)_2O\text{-}(\text{-}Si(CH_3)_2\text{-}O\text{-})_{230}\text{-}S_i(CH_3)_2H$$

(Vinyl group containing compound)

The vinyl group containing compound for the present invention is produced through copolymerization or polymerization of at least one type of olefin selected from the group consisting of ethylene, propylene, 1-butene, 1-pentene, and 1-hexene.

The vinyl group containing compound is desirably an ethylene/$\alpha$-olefin copolymer including 81 to 100 mol% of constituent unit derived from ethylene and 0 to 19 mol% of constituent unit derived from $C_{3-20}$ $\alpha$-olefin. The ethylene/$\alpha$-olefin copolymer including 90 to 100 mol% of constituent unit derived from ethylene and 0 to 10 mol% of constituent unit derived from $C_{3-20}$ $\alpha$-olefin is more desirable. In particular, 100 mol% of constituent unit derived from ethylene is preferable.

The vinyl group containing compound has molecular weight distribution (i.e., the ratio of weight average molecular weight and number average molecular weight: Mw/Mn) measured by gel permeation chromatography (GPC) of preferably 1.1 to 3.0.

The number average molecular weight (Mn) of the vinyl group containing compound is preferably 100 or more and 500,000 or less, more preferably 500 or more and 300,000 or less, and further preferably 1,500 or more and 100,000 or less.

The vinyl group containing compound has a melting point of preferably 70°C or higher and 130°C or lower. The number average molecular weight, which is determined by GPC method, of the vinyl group containing compound for the present invention is preferably 100 or more and 500,000 or less, more preferably 500 or more and 300,000 or less, and further preferably 1,500 or more and 100,000 or less.

The vinyl group of the vinyl group containing compound is preferably present at the terminal of the main chain, and more preferably only at the terminal of the main chain.

In case where the vinyl group containing compound has a vinyl group only at the terminal of the main chain, the unsaturation rate of terminals calculated by $^1$H-NMR is preferably 80 mol% or more and 99.5 mol% or less, and more preferably 90 mol% or more and 99 mol% or less.

(Production method for silicon containing polyolefin resin)

The silicon containing polyolefin resin for the present invention is the silicon containing polyolefin resin produced through the reaction of the vinyl group containing compound and the silicon containing compound under the presence of transition metal catalyst in accordance with the method described in JP-A- 2014-223752, its derivatives or the mixture thereof.

The silicon containing polyolefin resin is specifically exemplified by the resins comprising the structures represented by Formulae (4) to (6). The combinations of the vinyl group containing compound and the silicon containing compound are not limited to these examples.

Formula (4): $(CH_3)_3S_iO\text{-}(\text{-}S_i[CH_2\text{-}(CH_2)_{n-2}\text{-}CH_3](CH_3)\text{-}O\text{-})_a\text{-}S_i(CH_3)_3$

(In Formula (4), a is an integer of 2 or more. The upper limit of a is preferably 1000, more preferably 300, and further preferably 50.)

Formula (5): $(CH_3)_3S_iO\text{-}(\text{-}S_i(CH_3)_2\text{-}O\text{-})_b\text{-}(\text{-}S_i[CH_2\text{-}(CH_2)_{n-2}\text{-}CH_3](CH_3)\text{-}O\text{-})_c\text{-}S_i(CH_3)_3$ (In Formula (5), b is an integer of 1 or more, and c is an integer of 2 or more. The upper limit of the sum of b and c is preferably 1000, more preferably 300, and further preferably 50.)

Formula (6):     $CH_3-(CH_2)_{n-2}-CH_2-S_i(CH_3)_2O-(-S_i(CH_3)_2-O-)_d-S_i(CH_3)_2-CH_2-(CH_2)_{n-2}-CH_3$

(In Formula (6), d is an integer of 1 or more. The upper limit of d is preferably 1000, more preferably 300, further preferably 50, and particularly preferably 25.)

The silicon containing polyolefin resin for the present invention comprises a block copolymer with polyethylene structure at both terminals of the polydimethylsiloxane as exemplified in Formula (6) in amount of further preferably 80 weight% or more, particularly preferably 90 weight% or more. In Formula (6), d is an integer of preferably 3 or more, and further preferably 10 or more.

In Formulae (4) to (6), n is an integer of preferably 100 or more, and further preferably 150 or more.

To attain the characteristics of the film of the present invention or to produce the film of the present invention present invention, the silicon containing polyolefin resin for the present invention preferably satisfies the following i) and ii), further preferably i) to iii), and more preferably i) to iv).

i) The density is from 900 to 1000 kg/m$^3$.
ii) The melting point is from 100 to140°C.
iii) The number average molecular weight is from 1,000 to 20,000.
iv) The copolymerization rate of silicon is from 1 to 50 weight%.

The method for determination of the chemical formula and the molecular weight of the silicon containing polyolefin resin is described in Examples.

(Polyethylene resin)

The resin composition for the sealing layer preferably comprises polyethylene resin. The polyethylene is a copolymer of an ethylene monomer and α-olefin. Examples of the α-olefin include propylene, buten-1, hexene-1, 4-methyl-pentene-1, octene-1, decene-1, and 3-methylbutene-1.

The copolymer of an ethylene monomer and α-olefin may be generally referred to as high-pressure low-density polyethylene, linear low-density polyethylene, or polyethylene elastomer. The elastomer means an olefin thermoplastic copolymer having a rubber like elasticity at around normal temperature. The melting point of high-pressure low-density polyethylene (LDPE), linear low-density polyethylene (LLDPE), and polyethylene elastomer is preferably from 50 to 140°C, respectively.

In the present invention, the density of the polyethylene resin raw materials for blending is preferably from 850 to 970 kg/m$^3$, more preferably 860 to 965 kg/m$^3$, and further preferably 865 to 960 kg/m$^3$. The polyethylene resin with a density of 850 kg/m$^3$ or more will not lead to significant decrease in peeling strength of the sealing layers after heat-sealing. Similarly, the polyethylene resin with a density of 970 kg/m$^3$ or less will not lead to significant decrease in peeling strength of the sealing layers after heat-sealing. In addition, polymerization will be facilitated.

The lower limit of the melt flow rate (MFR) of the polyethylene resin is preferably 0.6 g/10min, more preferably 1.0 g/10min, and further preferably 1.5 g/lOmin. MFR of 0.6 g/10min or more will lead to fine dispersion of the polypropylene and the polyethylene resin, and will not result in significantly low peeling strength of the sealing layers after heat-sealing.

The upper limit of the melt flow rate of the polyethylene resin is preferably 5.0 g/10min, more preferably 4.0 g/lOmin, further preferably 3.5 g/lOmin, and particularly preferably 3.0 g/10min or less. MFR of 5.0 g/10min or less will lead to fine dispersion of the polypropylene and the polyethylene resin, resulting in a decrease in peeling strength of the sealing layers after heat-sealing.

The finely dispersed state can be created by blending and melting the polypropylene resin and the polyethylene resin, and the finely dispersed state can reduce the strength in peeling of the sealing layers or the sealing layer and an opening portion of other container members after heat-sealing.

Strength in peeling of the sealing layers or the sealing layer and an opening portion of other container members after heat-sealing will decrease in the order of the ethylene copolymer (polyethylene elastomer), LLDPE, and LDPE. This reason is considered that the ethylene copolymer has incompatibility with the polypropylene resin only at an ethylene portion, whereas LLDPE can be finely dispersed due to its side chain and LDPE has significant fine-dispersion property due to its long side chain.

Specifically, the elastomer is exemplified by ethylene-butene copolymer elastomer (TAFMER A1085S, manufactured by Mitsui Chemicals, Inc.) with density of 885 kg/m$^3$ and MFR (230°C, 2.16 kg) of 2.2 g/lOmin, and ethylene propylene copolymer elastomer (TAFMER P0480, manufactured by Mitsui Chemicals, Inc.) with density of 869 kg/m$^3$ and MFR (230°C, 2.16 kg) of 1.8 g/lOmin.

(Resin composition)

The resin composition forming the sealing layer for the sealant film of the present invention comprises (a) the polypropylene resin and (b) the silicon containing polyolefin resin.

Preferably, the resin composition further comprises (c) polyethylene resin.

In case where the polyethylene resin is LDPE or LLDPE, the contents of (a), (b), and (c) in the resin composition forming the sealing layer are preferably 30 to 70 weight%, 3 to 30 weight%, and 10 to 40 weight%, respectively, to whole resin composition.

The content of (a) the polypropylene resin in the resin composition is more preferably 35 weight% or more, further preferably 40 weight% or more, and particularly preferably 55 weight% or more. The content of (a) the polypropylene resin of 30 weight% or more will maintain the stiffness of the film.

The content of the polypropylene resin in the resin composition is more preferably 65 weight% or less, and further preferably 60 weight% or less. The content of (a) the polypropylene resin of 70 weight% or less will lead to easy peelability.

The content of (b) the silicon containing polyolefin resin in the resin composition is more preferably 5 weight% or more, further preferably 7 weight% or more, and particularly preferably 12 weight% or more. The content of the silicon containing polyolefin resin of 3 weight% or more will lead to sufficient liquid repellency, especially high liquid repellency to cooking oil.

The content of (b) the silicon containing polyolefin resin in the resin composition is more preferably 28 weight% or less, further preferably 25 weight% or less, further more preferably 20 weight% or less, and further more preferably 15 weight% or less. The content of (b) the silicon containing polyolefin resin of more than 30 weight% will not further improve liquid repellency. Low content of (b) the silicon containing polyolefin resin will lead to less segregation to the surface of the sealing layer. The content of (c) the polyethylene resin in the resin composition is more preferably 12 weight% or more, further preferably 15 weight% or more, and particularly preferably 20 weight% or more. The content of the polyethylene resin of 10 weight% or more will lead to a decrease in peeling strength of the sealing layers after heat-sealing.

The content of (c) the polyethylene resin in the resin composition is more preferably 35 weight% or less, further preferably 30 weight% or less, and further more preferably 20 weight% or less. The content of (c) the polyethylene resin of more than 40 weight% will barely decrease heat-resistance.

The contents of (a) the polypropylene resin, (b) the silicon containing polyolefin, and (c) the polyethylene resin are measured by the method described in Examples.

In case where the polyethylene resin is an elastomer, the contents of (a), (b), and (c) in the resin composition forming the sealing layer are preferably 30 to 85 weight%, 3 to 30 weight%, and 10 to 40 weight%, respectively, to whole resin composition.

The content of (a) the polypropylene resin in the resin composition is more preferably 35 weight% or more, further preferably 40 weight% or more, and particularly preferably 55 weight% or more. The content of (a) the polypropylene resin of 30 weight% or more will maintain the stiffness of the film.

The content of the polypropylene resin in the resin composition is more preferably 80 weight% or less, and further preferably 75 weight% or less. The content of (a) the polypropylene resin of 85 weight% or less will maintain easy peelability.

The content of (b) the silicon containing polyolefin resin in the resin composition is more preferably 5 weight% or more, further preferably 7 weight% or more, and particularly preferably 12 weight% or more. The content of the silicon containing polyolefin resin of 3 weight% or more will lead to sufficient liquid repellency, especially high liquid repellency to cooking oil.

The content of (b) the silicon containing polyolefin resin in the resin composition is more preferably 25 weight% or less, further preferably 20 weight% or less, and further more preferably 15 weight% or less. The content of (b) the silicon containing polyolefin resin of more than 30 weight% will not further improve liquid repellency. Low content of (b) the silicon containing polyolefin resin will lead to less segregation to the surface of the sealing layer.

The content of (c) the polyethylene resin in the resin composition is more preferably 12 weight% or more, further preferably 15 weight% or more, and particularly preferably 20 weight% or more. The content of the polyethylene resin of 10 weight% or more will lead to a decrease in peeling strength of the sealing layers after heat-sealing.

The content of (c) the polyethylene resin in the resin composition is more preferably 35 weight% or less, further preferably 30 weight% or less, and further more preferably 20 weight% or less. The content of (c) the polyethylene resin of 40 weight% or less will barely decrease heat-resistance.

The contents of (a) the polypropylene resin, (b) the silicon containing polyolefin, and (c) the polyethylene resin are measured by the method described in Examples.

(Particles)

The resin composition forming the sealing layer preferably comprises particles, and the particles are preferably the particles consisting of the inorganic oxide or the synthetic resin. The particles enable the arithmetic average roughness of the surface of the sealing layer to be 0.03 $\mu$m or more and 0.3 $\mu$m or less, leading to significant decreases in dynamic coefficient of friction between the surfaces of the sealing layer or the sealing layer and the surface opposite to the sealing layer, and significant decreases in the blocking strength related to slipperiness between the surfaces of the sealing layer of the film.

This is because the (b) silicon containing polyolefin resin segregated on the surface of the sealing layer impairs specific irregularity to the surface of the film that has decreased degree of crystallinity and hardness, and thus reduce the effects of the decrease, leading to significantly effective reduction in the dynamic coefficient of friction and the blocking strength.

The particles consisting of the inorganic oxide or the synthetic resin has the weight-average particle size of preferably 2 $\mu$m or more, more preferably 3 $\mu$m or more, and further preferably 5 $\mu$m or more. Also, the weight-average particle size is preferably 20 $\mu$m or less, more preferably 15 $\mu$m or less, and further preferably 10 $\mu$m or less.

The weight-average particle size is measured by the method described in Examples.

Examples of the particles consisting of the synthetic resin include cross-linked acrylic particles, polymethacrylic acid particles, silicone resin particles, and polyethylene particles.

Examples of the particles consisting of the inorganic oxide include particles consisting of silicon oxide, particles consisting of calcium carbonate, particles consisting of zeolite, or particles consisting of diatomite. Silica particles and synthesized silica particles are preferable among the particles consisting of silicon oxide, and zeolite or diatomite may be used in combination.

The content of the particles consisting of the inorganic oxide or the synthetic resin in the resin composition is preferably 0.1 weight% or more, more preferably 0.3 weight% or more, and further preferably 0.4 weight% or more. The content is preferably 3.0 weight% or less, more preferably 2.5 weight% or less, and further preferably 2.0 weight% or less. The content of the particles consisting of the inorganic oxide or the synthetic resin of 3.0 weight% or less will not lead to significantly large surface convexities and thus barely reduce liquid repellency.

(Organic lubricant)

The resin composition forming the sealing layer preferably comprises organic lubricant, and fatty acid amide is preferable as the organic lubricant. Containing the organic lubricant will improve anti-blocking properties and slipperiness of the sealing layer synergistically with the effect of the arithmetic average roughness Ra of the surface of the sealing layer controlled within 0.03 $\mu$m or more and 0.3 $\mu$m or less.

Examples of the fatty acid amide include oleamide, erucamide, behenamide, ethylenebisoleamide, and hexamethylene bis(oleic acid amide). These fatty acid amides may be used alone, or two or more of them may be used preferably in combination to maintain slipperiness and prevention effect from blocking even in the harshest environment.

In contrast, fatty acid ester is well-known not only as an emulsifier, but also as an anti-fogging agent to impart hydrophilic properties to the surface of films, however, fatty acid ester is not preferable in the present invention due to its effect of decreasing water repellency and oil repellency. Most fatty acid esters have low melting points, and may cause stickiness and appearance defects due to bleed out. Taking these points into account, fatty acid amide is preferable. Organic lubricant having a melting point of 25°C or higher is preferable.

The content of (d) the fatty acid amide and the fatty acid ester in the resin composition is preferably 0.01 to 0.5 weight%, more preferably 0.05 to 0.4 weight%, and particularly preferably 0.1 to 0.3 weight%. The fatty acid amide of 0.5 weight% or less will barely reduce the sealing strength.

(Others)

The resin composition for the sealant film of the present invention may comprise additives such as an antioxidant, a heat-resistant stabilizer, a weathering stabilizer, and a nucleating agent, ethylene-vinyl acetate copolymer, and ethylene-acrylic ester copolymer, if needed, to the extent not impairing the performance of the present invention as the sealant film.

(Method for formation of film)

The method for producing the sealant film of the present invention preferably employs processes including melt kneading of the polypropylene resin composition comprising the polyethylene resin, forming a sheet of molten resin composition by melt extruding the resin composition after melt kneading, and solidification of the sheet of molten resin composition by cooling.

The sealant film of the present invention may be a monolayer film, more preferably a laminated film. In case of a laminate, the layer including the polyethylene resin and the silicon containing polyolefin and having the arithmetic average roughness of at least one side of the surface layer of 0.07 μm or more and 0.5 μm or less can be provided with a layer including a thermoplastic resin composition, preferably polyolefin resin composition.

In case where the film is a monolayer, the thickness of the film is preferably 3 μm or more, more preferably 10 μm or more, further preferably 15 μm or more, and particularly preferably 20 μm or more. The thickness is preferably 200 μm or less, more preferably 150 μm or less, and particularly preferably 100 μm or less. The film with the thickness of less than 3 μm will have decreased effect of the silica particles and thus the effect of the slipperiness and anti-blocking properties may not be sufficient.

The production method will be described in detail below. The longitudinal direction indicates a conveyance direction of the unstretched sheet, and the width direction indicates the direction orthogonal to it.

(Mixing process of raw materials)

In case where silicon containing polyolefin resin and the polyethylene resin are mixed or particles such as silica particles and the polypropylene are mixed, any method may be employed as long as they are uniformly mixed. In case where a masterbatch is used, raw materials may be mixed with a ribbon blender, henschel mixer, or a tumbler mixer.

(Process of melt kneading)

The raw materials for film such as polypropylene resin is dried or dried with hot air so that the moisture content thereof becomes less than 1000 ppm. Then, each raw material is weighed, mixed, and introduced into an extruder for melt kneading.

The lower limit of the temperature for melting and mixing of the polyethylene resin composition is preferably 200°C, more preferably 210°C, and further preferably 220°C. The temperature less than the range will lead to unstable discharge. The upper limit of the temperature for melting of the resin is preferably 260°C. The temperature higher than the range will progress decomposition of the resin and thus generates cross-linked organic material as a result of resin recombination, leading to an increase in amount of foreign substance such as gel.

The antioxidant in the polyethylene resin composition enables melt extrusion at higher temperatures, however, the temperature is preferably 270°C or lower.

(Filtration)

In the process of the melt kneading, the melted polyethylene resin composition may be subjected to high precision filtration to remove foreign substances in the resin composition. The filter medium for high precision filtration of the melted resin is not particularly limited. The filter medium of sintered stainless steel is preferable due to its excellent removal performance of foreign substance such as so-called gel and agglomerates that mainly include Al, Si, Ti, Sb, Cu, and Ge derived from additives such as catalysts. The filter has filtration accuracy of preferably 200 μm or less.

(Filter pressure)

Preferably, an increase in pressure during melt kneading of the polyethylene resin composition is small.

(Process of melt extrusion)

The sheet of polypropylene resin composition after melting is, for example, melt extruded from a T-die, cast onto a cooling roll, and solidified by cooling to produce an unstretched sheet. Specifically, the melt resin composition is preferably cast onto a cooling roll.

Since the silicon containing polyolefin for the present invention is a copolymer with polyethylene, bleed out is not observed after the melt kneading and melt extrusion processes. Also, the accumulation of foreign substances and die drool that appears in case of adding silicone resin is significantly reduced.

The sheet of polypropylene resin composition after melt kneading is melt extruded and formed into film by a method such as an inflation method or a T-die method, and T-die method is particularly preferable in that the melting temperature of the resin can be raised.

(Staining of die lip (bleed out))

In the melt extrusion of the silicon containing polyolefin, the silica particles, and the polypropylene resin from a T-die, less staining at the T-die lip is preferable. The staining at the die lip is measured by the method described in Examples.

(Process of solidification by cooling)

The melted sheet of the polyethylene resin composition formed through melt extrusion from a T-die is preferably cooled by casting onto a cooling roll. The lower limit of the temperature of the cooling roll is preferably 10°C. The temperature less than the limit may undesirably cause saturation in effect of crystallization inhibition and problems such as condensation. The upper limit of the temperature of the cooling roll is preferably 70°C or lower. The temperature higher than the limit may undesirably progress crystallization and thus decrease transparency. The temperature of the cooling roll within the range preferably needs reduced humidity in the surrounding environment of the cooling roll to prevent condensation.

In casting, the surface temperature of the cooling roll is raised due to the contact of heated resin on the surface. Usually, a cooling roll is cooled by cooling water flowing through internal piping. The temperature difference of the surface of a cooling roll in a width direction should be reduced by sufficient amount of cooling water, the piping arrangement, and maintenance to prevent sludge from adhering to the piping. The thickness of the unstretched sheet is preferably 3 to 200 $\mu$m.

(Multilayer structure)

Preferably, the sealant film of the present invention has a multilayer structure. In case of multilayer structure, the sealant film comprises a layer including the polyolefin resin and the silicon containing polyolefin, and having the arithmetic average roughness of the surface layer of 0.07 $\mu$m or more and 0.5 $\mu$m or less on at least one surface of the film, and the film can be provided with one or two or more of other layers including thermoplastic resin composition, preferably including polyolefin resin composition.

The multilayered structure including the silicon containing polyolefin resin only in its surface layer can decrease the use amount of silicon containing polyolefin resin, resulting in reduced deposition. Further, such a structure of the film contributes to improving other characteristics of the film or imparting new function.

The multilayered film is specifically produced by a conventional multilayering apparatus (a multi-layer feed block, a static mixer, and a multi-layer multimanifold).

For example, thermoplastic resins sent out from different flow paths by at least two extruders can be laminated into a multilayer structure with a feed block, a static mixer, or a multimanifold die. Alternatively, the multilayer structure may be formed by only one extruder through introducing the multilayering apparatus into a melt line located between the extruder and a T-die.

In case where the film has two-layer structure, the film comprises the sealing layer (layer A) including the polyolefin resin and the silicon containing polyolefin and having the arithmetic average roughness of the surface layer of 0.07 $\mu$m or more and 0.5 $\mu$m or less at least one side layer of the film, and the laminate layer (layer C) including thermoplastic resin composition, preferably polyolefin resin composition.

In case where the film has three-layer structure, the film comprises the sealing layer (layer A) including the polyolefin resin and the silicon containing polyolefin and having the arithmetic average roughness of the surface layer of 0.07 $\mu$m or more and 0.5 $\mu$m or less at least one side layer of the film, and the intermediate layer (layer B) and the laminate layer (layer C) that include thermoplastic resin composition, preferably polyolefin resin composition, respectively, in this order. The outermost layers are layers A and C.

The polyolefin resin for forming the intermediate layer (layer B) and the laminate layer (layer C) is preferably polyethylene resin or polypropylene resin.

(Polyethylene resin)

Exaples of the polyethylene resin for forming the intermediate layer (layer B) and the laminate layer (layer C) include a homopolymer of ethylene monomer, a copolymer of ethylene monomer and $\alpha$-olefin, a copolymer of ethylene monomer and other monomers, and a mixture thereof. Examples of the $\alpha$-olefin include propylene, buten-1, hexene-1, 4-methyl-pentene-1, octene-1, decene-1, and 3-methylbutene-1.

Examples of other monomers include vinyl acetate, (meth)acrylic acid, and (meth)acrylic acid ester.

The polyethylene resin may be crystalline, low crystalline or amorphous random or block copolymer, or a mixture thereof.

The copolymer of ethylene monomer and $\alpha$-olefin is generally referred to as high-pressure low-density polyethylene, linear low-density polyethylene, medium density polyethylene, or high-density polyethylene.

Although these polyethylene resins impart high heat-sealing strength, hot tack properties, impurity sealability, and impact resistance, the copolymer of ethylene monomer and other monomers is contained as little as possible or is not be contained, preferably.

The intermediate layer (layer B) and the laminate layer (layer C) may include the same or different polyethylene resin.

Preferably, the average density of the polyethylene resin of each layer of the film is in the following order: sealant layer (layer A) $\leqq$ intermediate layer (layer B) $\leqq$ laminate layer (layer C). Since the organic lubricant barely moves to a layer with higher density, containing the organic lubricant is effective to maintain the slipperiness of the sealant layer after lamination.

The lower limit of the density of the intermediate layer (layer B) is preferably 880 kg/m$^3$, more preferably 890 kg/m$^3$, and further preferably 900 kg/m$^3$. The film having the density less than the range has low stiffness, leading to poor processability.

The upper limit of the density of the intermediate layer (layer B) is preferably 940 kg/m$^3$, more preferably 930 kg/m$^3$, and further preferably 920 kg/m$^3$.

(Polypropylene resin)

The polypropylene resins for the intermediate layer (layer B) and the laminate layer (layer C) are exemplified by a homopolymer of propylene monomer, a random copolymer or a block copolymer of propylene monomer and $\alpha$-olefin, and a mixture thereof. Examples of the $\alpha$-olefin include ethylene, buten-1, pentene-1, hexene-1, 3-methylbutene-1, 4-methyl-pentene-1, octene-1, and decene-1.

The intermediate layer (layer B) of the film of the present invention may contain organic lubricant, the lower limit of the amount of the organic lubricant is preferably 200 ppm, and more preferably 400 ppm. The amount of the organic lubricant less than the lower limit may lead to poor slipperiness.

The upper limit of the amount of erucamide contained in the intermediate layer is preferably 2000 ppm, and more preferably 1500 ppm. The amount of erucamide more than the upper limit will lead to misalignment of winding due to excessive slipperiness.

The intermediate layer (layer B) of the film of the present invention may contain 10 to 30 mass% of recovery resin.

In the present invention, the laminate layer (layer C) of the polyethylene sealant film described above is preferably subjected to active ray treatments such as corona treatment. Such treatments will improve laminate strength.

(Film characteristics)

The characteristics of the sealant film of the present invention will be described in detail.

(Abundance ratio of silicon atom Si and carbon atom C (Si/C) in sealing layer (average Si level))

The abundance ratio of a silicon atom $S_i$ to a carbon atom C (SJC) in the sealing layer of the sealant film of the present invention is preferably 0.001 or more. The abundance ratio (SJC) of 0.001 or more will improve liquid repellency to contents with viscosity, such as cooking oil, Japanese salad dressing, and Worcester sauce. The abundance ratio (SJC) is more preferably 0.005 or more, further preferably 0.007 or more, and particularly preferably 0.01 or more.

The abundance ratio of a silicon atom $S_i$ to a carbon atom C (SJC) in the sealing layer of the sealant film of the present invention is preferably 0.02 or less. The abundance ratio (SJC) of 0.02 or less will barely decrease the peeling strength. The abundance ratio ($S_i$/C) is more preferably 0.018 or less, and further preferably 0.016 or less.

The measurement is conducted by the method described in Examples.

(Abundance ratio of silicon atom $S_i$ and carbon atom C (Si/C) on surface of sealing layer ($S_i$ level on surface))

The abundance ratio of a silicon atom Si to a carbon atom C (SJC) on the surface of the sealing layer of the sealant film of the present invention is preferably 0.05 or more. The abundance ratio (SJC) of 0.05 or more will improve liquid repellency to contents with viscosity, such as cooking oil, Japanese salad dressing, and Worcester sauce, in particular, liquid repellency to cooking oil will be significantly improved. The abundance ratio (SJC) is more preferably 0.07 or more, further preferably 0.1 or more, preferably 0.13 or more, and particularly preferably 0.15 or more.

The abundance ratio of silicon atom $S_i$ and carbon atom C (Si/C) on the surface of the sealing layer of the sealant film of the present invention is preferably 0.3 or less. The abundance ratio ($S_i$/C) of 0.3 or less will decrease the heat-sealing strength. The abundance ratio (SJC) is more preferably 0.2 or less.

The measurement is conducted by the method described in Examples.

(Ratio of Si level on surface and average Si level)

The ratio of the abundance ratio of the silicon atom Si to the carbon atom C (Si/C) on the surface of the sealing layer to the abundance ratio of the silicon atom Si to the carbon atom C (SJC) in the sealing layer of the sealant film of the present invention is preferably 2 or more, more preferably 3 or more, further preferably 5 or more, further more preferably 6 or more, particularly preferably 8 or more, and most preferably 10 or more.

The measurement is conducted by the method described in Examples.

(Arithmetic average roughness Ra)

The arithmetic average roughness Ra of the surface of the sealing layer of the present invention is preferably 0.05 $\mu$m or more. Ra of 0.05 $\mu$m or more will decrease the dynamic coefficient of friction between the sealing layers or the sealing layer and the film surface opposite to it, and the dynamic coefficient of friction of the surfaces of the sealing layer of the film or the sealing layer and the surface opposite to it. Also, that will decrease the blocking strength related to slipperiness of the surfaces of the sealing layer. As a result, the handleability of the film will be improved. The arithmetic average roughness of the surface of the sealing layer is more preferably 0.06 $\mu$m or more, and further preferably 0.07 $\mu$m or more.

The arithmetic average roughness Ra of the surface of the sealing layer of the present invention is preferably 0.3 $\mu$m or less. Ra of 0.3 $\mu$m or less will not lead to significantly small dynamic coefficient of friction between the sealing layers or the sealing layer and the film surface opposite to it and thus the misalignment of winding will be decreased, resulting in high handleability of the film. Ra is more preferably 0.25 $\mu$m or less.

The measurement is conducted by the method described in Examples.

(Maximum height of profile Rz)

The surface of the sealing layer of the sealant film of the present invention has the maximum height of profile Rz of preferably 1 $\mu$m or more. Rz of 1 $\mu$m or more will decrease the contact area of the sealing layers or the sealing layer and the film surface opposite to it and thus significantly increase blocking prevention effect, leading to high handleability of the film. Rz is more preferably 1 $\mu$m or more, and further preferably 3 $\mu$m or more.

The surface of the sealing layer of the sealant film of the present invention has the maximum height of profile Rz of preferably 30 $\mu$m or less. Rz of 30 $\mu$m or less will not lead to significantly large volume of gap between the sealing layers and the sealing layer and the film surface opposite to it and thus the misalignment of winding will be decreased, resulting in improved handleability of the film. Rz is more preferably 25 $\mu$m or less.

The measurement is conducted by the method described in Examples.

(Young's modulus/longitudinal direction)

The lower limit of the Young's modulus of the sealant film of the present invention (longitudinal direction) is preferably 100 MPa, more preferably 150 MPa, further preferably 200 MPa, and particularly preferably 250 MPa. The film with the Young's modulus of 100 MPa or more will not have significantly low stiffness and thus have high processability.

The upper limit of the Young's modulus of the sealant film of the present invention (longitudinal direction) is preferably 600 MPa, more preferably 500 MPa, and further preferably 400 MPa.

(Young's modulus/width direction)

The lower limit of the Young's modulus of the sealant film of the present invention (width direction) is preferably 100 MPa, more preferably 150 MPa, further preferably 200 MPa, and particularly preferably 250 MPa. The film with the Young's modulus of 100 MPa or more does not have significantly low stiffness, and has high processability.

The upper limit of the Young's modulus of the sealant film of the present invention (width direction) is preferably 600 MPa, more preferably 500 MPa, further preferably 400 MPa.

(Haze)

The upper limit of the haze of the sealant film of the present invention is preferably 15%, more preferably 14%, and further preferably 13.5%. The film with the haze of 15% or less will enable easy visibility of contents.

The lower limit of the haze of the sealant film of the present invention is preferably 0%. The lower limit of 2% is practically satisfactory.

The measurement is conducted by the method described in Examples.

(Liquid repellency)

The residual amount of viscous contents such as cooking oil, Japanese salad dressing, and Worcester sauce is an index for evaluating the liquid repellency of the sealant film of the present invention. The residual amount of liquid attaching to the sealant film is preferably 0.08 mg/28cm$^2$ or less among at least two of them, more preferably 0.08 mg/28cm$^2$ or less among cooking oil and Japanese salad dressing, and more preferably 0.8 mg/28cm$^2$ or less among cooking oil, Japanese salad dressing, and Worcester sauce.

The measurement is conducted by the method described in Examples.

(State of existence of silicon containing polyolefin resin)

The sealing layer of the sealant film of the present invention includes silicon containing polyolefin resin preferably segregated on the surface. However, the silicon containing polyolefin resin is not preferred to be deposited in a separated state on the surface of the sealing layer.

At the same time, the silicon containing polyolefin resin is finely dispersed in the sealing layer of the sealant film of the present invention, and preferably shows micro-phase separation structure.

The state of existence of the silicon containing polyolefin resin and the silicone resin on the surface of the sealing layer can be observed with a scanning electron microscope, and Si and C elements can be qualitatively analyzed with energy dispersive X-rays.

The cross-section of the sealing layer can be observed with a transmission electron microscope.

The measurement is conducted by the method described in Examples.

(Dynamic coefficient of friction)

The upper limit of the dynamic coefficient of friction between the sealing layers of the sealant film of the present invention is preferably 1.5, more preferable 1.0, further preferably 0.7, further more preferably 0.5, particularly preferably 0.4, and most preferably 0.3. The dynamic coefficient of friction between the sealing layers of 1.5 or less will lead to excellent opening property after made into a bag, resulting in decreased loss during processing.

The lower limit of the dynamic coefficient of friction between the sealing layers of the sealant film of the present invention is preferably 0.05, more preferably 0.08, and more preferably 0.1. The dynamic coefficient of friction of 0.05 or more will lead to facilitated heat-sealing during bag making, resulting in decreased loss during processing.

The upper limit of the dynamic coefficient of friction between the sealing layer and the opposite film surface of the sealant film of the present invention is preferably 2.0, more preferably 1.5, further preferably 1.2, further more preferably 1.0, particularly preferably 0.7, most preferably 0.5, and particularly preferably 0.4. The dynamic coefficient of friction between the sealing layer and the opposite film surface of 2.0 or less will lead to less wrinkles during winding, resulting in decreased loss during processing. The lower limit of the dynamic coefficient of friction between the sealing layer and the opposite film surface of the sealant film of the present invention is preferably 0.05, more preferably 0.08, and more preferably 0.1. The dynamic coefficient of friction of 0.05 or more will not lead to significantly slippy film during winding, and misalignment of winding will be decreased.

The measurement is conducted by the method described in Examples.

(Static coefficient of friction)

The upper limit of the static coefficient of friction between the sealing layers of the sealant film of the present invention is preferably 1.5, more preferably 1.0, further preferably 0.7, further more preferably 0.5, particularly preferably 0.4, and most preferably 0.3. The dynamic coefficient of friction between the sealing layers of 1.5 or less will lead to excellent opening property after made into a bag, resulting in decreased loss during processing.

The lower limit of the static coefficient of friction between the sealing layers of the sealant film of the present invention is preferably 0.05, more preferably 0.08, and more preferably 0.1. The static coefficient of friction of 0.05 or more will lead to facilitated heat-sealing during bag making, resulting in decreased loss during processing.

The measurement is conducted by the method described in Examples.

(Degree of blocking)

The upper limit of the degree of blocking related to slipperiness between the surfaces of the sealing layer of the sealant film of the present invention is preferably 100 mN/70mm, more preferably 90 mN/70mm, further preferably 80 mN/70mm, particularly preferably 70 mN/70mm, and most preferably 60 mN/20mm. The degree of blocking between the surfaces of the sealing layer of 100 mN/70mm or less will lead to smooth unwinding from a film in film processing.

The lower limit of the degree of blocking related to slipperiness between the surfaces of the sealing layer of the sealant film of the present invention is preferably 0 mN/70mm. The lower limit of 15 mN/70mm is practically satisfactory.

The measurement is conducted by the method described in Examples.

(Strength of easy-peelability at 150°C)

The strength of easy-peelability at 150°C of the sealant film of the present invention is preferably 25 mN/15mm or less, preferably 20 mN/15mm or less, and further preferably 15 mN/10mm or less.

The measurement is conducted by the method described in Examples.

(Strength of easy-peelability at 190°C)

The strength of easy-peelability at 190°C of the sealant film of the present invention is preferably 30 mN/15mm or less, preferably 25 mN/15mm or less, and further preferably 20 mN/15mm or less.

The measurement is conducted by the method described in Examples.

(Strength of easy-peelability at 200°C)

The strength of easy-peelability at 200°C of the sealant film of the present invention is preferably 35 mN/15mm or less, preferably 30 mN/15mm or less, and further preferably 25 mN/20mm or less.

The measurement is conducted by the method described in Examples.

(Peeling strength at 150°C)

The peeling strength at 150°C and a sealing pressure of 0.2 MPa of the sealant film of the present invention is preferably 0.5 N/15mm or more, more preferably 0.7 N/15mm or more, further preferably 0.9 N/15mm or more, further more preferably 1 N/15mm or more, further more preferably 2 N/15mm or more, further more preferably 3 N/15mm or more, further more preferably 4 N/15mm or more, particularly preferably 5 N/15mm or more, and most preferably 6 N/15mm or more.

The peeling strength at 150°C and a sealing pressure of 0.4 MPa of the sealant film of the present invention is preferably 1 N/15mm or more, more preferably 2 N/15mm or more, further preferably 3 N/15mm or more, further more preferably 4 N/15mm or more, particularly preferably 5 N/15mm or more, and most preferably 6 N/15mm or more.

The peeling strength at 150°C and a sealing pressure of 0.6 MPa of the sealant film of the present invention is preferably 1 N/15mm or more, more preferably 2 N/15mm or more, further more preferably 3 N/15mm or more, further more preferably 4 N/15mm or more, particularly preferably 5 N/15mm or more, and most preferably 6 N/15mm or more.

The measurement is conducted by the method described in Examples.

(Peeling strength at 190°C)

The peeling strength at 190°C and a sealing pressure of 0.2 MPa of the sealant film of the present invention is preferably 1 N/15mm or more, more preferably 1.5 N/15mm or more, further preferably 1.8 N/15mm or more, further more preferably 2 N/15mm or more, further more preferably 3 N/15mm or more, further more preferably 4 N/15mm or more, particularly preferably 5 N/15mm or more, and most preferably 6 N/15mm or more.

The peeling strength at 190°C and a sealing pressure of 0.4 MPa of the sealant film of the present invention is preferably 1 N/15mm or more, more preferably 2 N/15mm or more, further preferably 3 N/15mm or more, further more preferably 4 N/15mm or more, particularly preferably 5 N/15mm or more, and most preferably 6 N/15mm or more.

The peeling strength at 190°C and a sealing pressure of 0.6 MPa of the sealant film of the present invention is preferably 1 N/15mm or more, more preferably 2 N/15mm or more, further preferably 3 N/15mm or more, further more preferably 4 N/15mm or more, particularly preferably 5 N/15mm or more, and most preferably 6 N/15mm or more.

The measurement is conducted by the method described in Examples.

(Peeling strength at 200°C)

The peeling strength at 200°C and a sealing pressure of 0.2 MPa of the sealant film of the present invention is preferably 1 N/15mm or more, more preferably 1.5 N/15mm or more, further preferably 1.8 N/15mm or more, further more preferably 2 N/15mm or more, further more preferably 3 N/15mm or more, further more preferably 4 N/15mm or more, particularly preferably 5 N/15mm or more, and most preferably 6 N/15mm or more.

The peeling strength at 200°C and a sealing pressure of 0.4 MPa of the sealant film of the present invention is preferably 1 N/15mm or more, more preferably 2 N/15mm or more, further preferably 3 N/15mm or more, further more preferably 4 N/15mm or more, particularly preferably 5 N/15mm or more, and most preferably 6 N/15mm or more.

The peeling strength at 200°C and a sealing pressure of 0.6 MPa of the sealant film of the present invention is preferably 1 N/15mm or more, more preferably 2 N/15mm or more, further preferably 3 N/15mm or more, further more preferably 4 N/15mm or more, particularly preferably 5 N/15mm or more, and most preferably 6 N/15mm or more.

The measurement is conducted by the method described in Examples.

(Laminate)

The sealant film of the present invention may be laminated with at least one type of other substrate films to form a laminate, and the laminate will be used in general forms such as packaging film and packaging sheet.

The substrate film is not particularly limited and selected depending on the purpose of the use of the laminate, if needed. Examples of the films include polyolefin films such as polyethylene and polypropylene, a styrene resin film, polyester films such as polyethylene terephthalate and polybutylene terephthalate, polyamide films such as nylon 6 and nylon 66, stretched films of those films, a laminated film of polyolefin film and a resin film having gas barrier property such as polyamide film or ethylene-vinyl alcohol copolymer film, metal foils such as aluminum, and vapor deposited film through vapor deposition of aluminum or silica, and paper. One type of the substrate film may be used, or two or more types may be used in combination.

Preferably, the substrate film adjoining the sealant layer does not contain the silicon containing polyolefin. The substrate film adjoining the sealant layer is preferably a polyolefin film.

The sealant film can be laminated onto the substrate film by dry lamination, or by extrusion lamination through extrusion and lamination of only resin for sealant layer on the substrate film. The dry lamination method is preferable among them from the viewpoint of productivity.

The sealant film of the present invention may be a structure of sealant film/adhesive layer/substrate film for stronger adhesion of the sealant film and the substrate film. The adhesive layer may contain anchor coat agents such as urethane and isocyanate adhesives, or adhesive resins such as unsaturated carboxylic acid-grafted polyolefin, for stronger bonding of the adjoining layers.

The thickness of the laminate is not particularly limited, and the laminate has the thickness of preferably 10 to 200 μm for the use of the film as a lid member, and preferably 200 to 1000 μm for the use as a cup or a tray sheet.

(Package product)

A container can be produced by (i) facing the sealant films of the laminate to each other or facing the sealant film of the laminate and a substrate film to each other, and then (ii) heat-sealing at least a portion of the periphery of the facing objects so as to form a desired container shape from outer surface. A sealed container of bag shape can be produced by heat-sealing all around the periphery. The forming process of the bag-shaped container may be in combination with filling process of contents. That is, the contents may be filled to the bag-shaped container after heat-sealing of the bottom and the side of the bag-shaped container, and then the remaining upper portion is heat-sealed to form a package product. The laminate is applicable to an automatic packaging equipment for packaging solids such as snacks, powders or liquid materials.

Also, a container including packaged contents can be produced by (i) filling the contents to a cup-shaped container formed by vacuum molding or pressure molding, a container formed by injection molding or blow molding, or a container formed from a paper substrate, (ii) closing the containers with a lid member made from the laminate of the present invention, and then (iii) heat-sealing.

EXAMPLES

The embodiments of the present invention will be described with Examples and Comparative Examples, however, the scope of the present invention is not limited by Examples.

The measurement values of each item in description, Examples, and Comparative Examples were obtained by the following methods.

(Characteristics of raw materials)

The density, the melt flow rate (MFR), and the melting point of the polyolefin resin and the silicon containing polyolefin for the sealant film, and the weight-average particle size and the content rate of the particles consisting of the inorganic oxide or the synthetic resin were measured by the following methods.

For preparation of measurement samples, the layer to be measured is a whole layer of the sealant film in case where the sealant film consists of a single layer, or the layer that is scraped off the layer to be measured after conforming the boundary of the sealing layer by SEM in case where the sealant film consists uf multiple layers. The similar measurement may be performed using the resulting residue that is obtained by dissolving only target raw material into an insoluble solution with the target raw material to produce a solution, filtering the solution, and removing a solvent. The target layer can be relatively easily scraped off from multi-layered film with a razor after lamination of the sealant film to polyethylene terephthalate (PET) film.

(Density: kg/cm$^3$)

The density was measured by the density gradient tube method according to JIS K 7112.

(Melt flow rate (MFR): g/10min)

The polyethylene resin was measured at 190°C and the polypropylene resin was measured at 230°C in accordance with JIS K 7210.

(Melting point: °C)

The melting point of the sample (10 mg) was measured at a heating rate of 10°C/min by a differential scanning calorimeter (DSC, manufactured by Seiko Instruments Inc.). The detected endothermic peak temperature in melting was determined as the melting point.

(Content of particles consisting of inorganic oxide or synthetic resin in film: weight %)

The content of particles consisting of inorganic oxide or synthetic resin in the film was calculated from the addition amount in the raw material resin composition before processing.

The content of the particles after molding of the film can be measured by separating silica particles by dissolving the film in a solvent of decane at a temperature at which the film can be completely dissolve, and filtrating the residue with a filter having an accuracy of 2 $\mu$m.

(Weight-average particle size of particles consisting of inorganic oxide or synthetic resin: $\mu$m)

The weight-average particle size of the particles consisting of the inorganic oxide or the synthetic resin can be determined as a particle size at a cumulative 50 mass% from particles with smaller size in the cumulative curve. The measurement was conducted by a laser diffraction/scattering particle size distribution analyzer (MT3200II, manufactured by NIKKISO CO., LTD.).

The tendency of deposition of compounds from resin composition forming the sealing layer of thus produced sealant film was measured by the following method.

(Tendency of deposition of compounds from resin composition forming the sealing layer)

The resin composition for the sealing layer of Comparative Example 1 was melted and discharged at 230°C from multiple nozzles of 4 mm in diameter disposed in the width direction of a die of an extruder. One hour after the start of the resin discharge, the degree of deposition of compound (degree of staining) at around the nozzles was visually evaluated, and was classified into the following levels (good or bad) according to the criteria (good) of the above case as a standard.

Good: No deposition of compound is confirmed at around nozzles.

Bad: Deposition of compound is obviously confirmed at around nozzles.

(Characteristics of sealant film)

Characteristics of the sealant film was measured by the following methods.

(Abundance ratio of silicon atom $S_i$ and carbon atom C on surface of sealing layer)

Before the measurement, the surface of the sealing layer of the sealant film was cleaned with ethanol. The surface of the sealing layer was measured by an X-ray photoelectron spectrometer (ESCA) system (K-Alpha, manufactured by Thermo Fisher Scientific K.K.) through excitation with excitation X-rays of monochromatic Al K$\alpha$-ray (output: 12 kV, 6 mA, photoelectron escape angle: 90°, spot size: 400 $\mu$m $\phi$, pass energy: 50 eV (narrow scan), step: 0.1 eV (narrow scan)), and the composition ratio of the detected elements on surface was calculated.

The measurement result shows the composition ratio of the elements on surface in a region with a depth of several to ten nanometers from the film surface.

(Abundance ratio of silicon atom $S_i$ and carbon atom C (Si/C) in sealing layer (average $S_i$ level))

1) After a rough grasp of the layer structure by cross-sectional examination, only the resin composition forming the sealing layer was scraped off with a feather blade. The scraped resin composition was completely dissolved in a mixed solvent of o-dichlorobenzene and hexadeuterobenzene (80/20, volume ratio) at 135°C. The concentration of the sample solution was adjusted to 25 to 30 mg/0.7mL. For one-dimensional NMR measurement of Si, around 1 wt% of acetylacetone chromium (III) was added to the solution to be measured.

The following measurement was conducted with the sample solution to identify the chemical formula, the molecular weight, and the content of the silicon containing polyolefin resin in the resin composition forming the sealing layer.

2) With reference to standard spectra by Aldrich and standard materials, rough structure of compound was identified by finding out how the H, C, and Si elements were bonded based on $^1$H-NMR spectrum, $^{13}$C-NMR spectrum, $^{13}$C-DEPT spectrum, and $^{29}$S$_i$-NMR spectrum by one-dimensional NMR.

Measurement conditions are as follows.

Instrument: Fourier transform nuclear magnetic resonance spectrometer (type: AVANCE NEO 600, manufactured by Bruker)

Resonance frequency: 600.13 MHz for $^1$H-NMR, 150.92 MHz for $^{13}$C-NMR, 119.22 MHz for $^{29}$S$_i$-NMR

Measurement temperature: 110 or 115°C for $^1$H-NMR, 110 or 115°C for $^{13}$C-NMR, 110 or 115°C for $^{13}$C-DEPT, 110°C for $^{29}$S$_i$-NMR

Pulse repetition interval: 3.75 seconds for $^1$H-NMR, 2.8 to 2.9 seconds for $^{13}$C-NMR, 3.5 seconds for $^{13}$C-DEPT, 7.0 seconds for $^{29}$S$_i$-NMR

Angle of detection pulse: 30° for $^1$H-NMR, 30° for $^{13}$C-NMR, 90° for $^{29}$S$_i$-NMR

$^1$H decoupling: full decoupling for $^{13}$C-NMR, inverse gated decoupling for $^{29}$S$_i$-NMR (capturing time by FID: 0.7 seconds)

Number of scans: 16 times for $^1$H-NMR, about 300 to 1200 times for $^{13}$C-NMR, about 100 to 1100 times for $^{13}$C-DEPT, about 4000 times for $^{29}$S$_i$-NMR

3) Further, the correlation peaks of adjacent $^1$H atoms, or $^1$H atoms two or three bonds apart, the correlation peaks of directly bonded $^1$H and $^{13}$C, the correlation peaks of heteronuclear atoms two or three bonds apart with each other ($^1$H,$^{13}$C) and two or three bonds apart with each other ($^1$H,$^{29}$Si) were examined by two-dimensional NMR including COSY, TOCSY, $^{13}$C-HSQC, HMBC, and $^{29}$S$_i$-HMBC for further identification of the rough structure determined by one-dimensional NMR.

4) The abundance ratio of Si atom per carbon atom (SJC) in the resin composition forming the sealing layer of the sealant film (average Si level) can be determined from the molecular formula and the molecular weight of the silicon containing polyolefin resin in the resin composition, and the content of the silicon containing polyolefin resin in the resin composition forming the sealing layer.

Specifically, the calculation method of the average Si level will be described below with an example where the resin compositions forming the sealing layer is a mixture of a polymer consisting of a constituent unit derived from ethylene having vinyl group at a terminal of its main chain, a silicon containing polyolefin resin produced from a raw material compound of dimethylsiloxane, and a polyethylene resin.

The concentration of dimethylsiloxane is calculated from the molecular formula of the silicon containing polyolefin. Suppose that the resin concentration is 26 weight%, the average concentration of the polydimethylsiloxane in the composition produced through addition of the 10 parts by weight of the silicon containing polyolefin to 90 parts by weight of the polypropylene resin, is 2.6 weight%.

The molecular formula per unit of the dimethylsiloxane is $C_2H_6S_iO$ (molecular weight per unit: 74.15), the molecular formula per polyolefin unit of the silicon containing polyolefin resin is $C_2H_4$ (molecular weight per unit: 28.05), and the molecular formula per propylene unit of polypropylene resin is CaHe (molecular weight per unit: 42.08).

The dimethylsiloxane is 0.35 mol (=(1000 x 2.6/100)/74.15), the polyolefin in the silicon containing polyolefin resin is 2.6 mol (=(1000 x (10-2.6)/100)/28.05), and the polypropylene resin is 21.4 mol (=(1000 x 90/100)/42.08), per 1 kg of the resin composition.

Therefore, Si (silicon) is 0.35 mol and C (carbon) is 48.7 mol (=0.35 x 2+2.6 x 2+21.4 x 2), per 1 kg of resin composition, and the abundance ratio of silicon atom per carbon atom in the resin composition (Si/C) is 0.007 (=0.35/48.7).

(Arithmetic average roughness Ra: $\mu$m)

The arithmetic average roughness was measured at any position on the surface of the sealing layer of sealant film in the region of 1 mm x 0.2 mm of a square-shaped film of 3 cm x 3 cm. Ra was measured by a contact type surface roughness meter (ET4000A, manufactured by Kosaka Laboratory Ltd.) in accordance with JIS B0601-2001. Measurement was conducted at 3 positions, and the average was determined as Ra.

(Maximum height of profile Rz: $\mu$m)

The maximum height of profile was measured at any position on the surface of the sealing layer of sealant film in the region of 1 mm x 0.2 mm of a square-shaped film of 3 cm x 3 cm. Rz was measured by a contact type surface roughness meter (ET4000A, manufactured by Kosaka Laboratory Ltd.) in accordance with JIS B0601-2001. Measurement was conducted at 3 positions, and the average was determined as Rz.

(Young's modulus, tensile strength at break, and tensile elongation at break)

The Young's modulus at 23°C in the longitudinal and width directions of the sealant film was measured in accordance with JIS K 7127.

Sample was cut out in the size of 15 mm x 200 mm from the film, and set to a tensile tester (dual column desktop tester Instron 5965, manufactured by Instron Japan Company Limited) with a chuck interval of 100 mm, and the measurement was conducted at a tensile speed of 200 mm/min.

The Young's modulus was determined from the strain-stress curve, especially from the inclination of a straight portion in the initial stage of elongation.

Both the tensile strength at break and the tensile elongation at break were defined as the strength and the elongation at the point of breakage of the sample.

(Haze)

The sealant film was measured with a direct reading Haze meter (manufactured by Toyo Seiki Seisaku-sho, Ltd.) in accordance with JIS K 7105.

$$\text{Haze}(\%) = \text{[Td(diffuse transmittance\%)/Tt(total light transmittance\%)]} \times 100$$

(Liquid repellency)

The liquid repellency of the sealant film was evaluated as follows.

(1) The sealant film was cut into a sheet of in a size of 10 cm in the longitudinal direction and 5 cm in the width direction. A double-sided tape (NW-5, width: 5 mm, manufactured by NICHIBAN Co., Ltd.) was applied to the surface of the laminate layer at one end in the longitudinal side and one end in the width side adjacent to it. The film was then folded in the center of the width direction so that the sealing layer became outward. The taped surface of the film and the opposite side of the surface of the laminate layer was attached to form a tubular strip of 10 cm x 2.5 cm.

(2) The weight of the tubular strip prepared in (1) was measured.

(3-1) The following test liquid was placed in a cup (size: 100 ml) up to about 70% of volume. The tubular strip after being weighed was immersed in the test liquid for 1 minute so that the tubular strip was immersed in the liquid up to 5.6 cm from the bottom. The tubular strip could be handled by the support of a steel square inserted from the opening portion of the tubular strip at the time of immersion and thus the opening portion could be prevented from being immersed in the test liquid accidentally.

Test liquid: cooking oil (product name; Nissin Salad Oil, manufactured by The Nisshin OilliO Group, Ltd.), Japanese salad dressing (product name; S-LINE Japanese soy sauce dressing, manufactured by SSK foods Co., Ltd.), and Worcester sauce (product name; Deluxe Koikuchi Sauce, manufactured by KOMI CORPORATION.).

(3-2) The tubular strip with liquid being attached was hung for 10 seconds in the state that the longitudinal direction of the strips was vertical. Then the tubular strip was hung for 50 seconds in the state that the longitudinal direction of the tubular strip was tilted at 45° to the horizontal with the width direction being remained horizontal. (4) The tubular strip with liquid being attached right after the operation in (3-2), was weighed to determine the amount of residual adhering liquid based on the weight difference from the weight in (2). The surface area of the tubular strip from its bottom to a position 5.6 cm from the bottom was 28 cm$^2$.

A tubular strip that had the amount of residual adhering liquid of more than 0.08/8 cm$^2$ among 2 types or more of liquids in 3 types of liquids was evaluated as "Bad". A tubular strip that had the residual adhering liquid amount of 0.08/8 cm$^2$ or less among 2 types of liquids was evaluated as "Good", and a tubular strip that had the residual adhering liquid amount of 0.08/8 cm$^2$ or less among 3 types of liquids was evaluated as "Very Good".

(Observation of dispersed condition of silicon containing polyolefin)

The surface of the sealing layer of the sealant film was observed with a scanning electron microscope while being irradiated with energy dispersive X-rays for qualitative analysis of the surface, and the results were mapped. The cross-section was also observed with a transmission electron microscope. The observation method is described in detail below.

(Qualitative analysis of elements by energy-dispersive X-ray spectroscopy (EDX))

Sample (size: 1 cm x 1 cm) was cut out from the sealant film, and placed on a sample holder with carbon tape attached on it. The sample was then coated with about 2 nm of platinum-palladium by a magnetron sputtering apparatus to ensure conductivity. The observation was carried out in a high vacuum mode.

The sample was analyzed through the measurement by a scanning electron microscope (S-3400N, manufactured by Hitachi, Ltd.) and an energy-dispersive X-ray detector (XFlash5010, manufactured by Bruker Co.), with irradiation at an acceleration voltage of 8 kV.

The elements of the sample of the sealant film were qualitatively analyzed from X-ray spectrum of the entire observation field. Among the detected elements, silicon (Si) was displayed in green in the resultant element mapping.

(Observation by transmission electron microscope (TEM))

Osmium was vapor deposited on both sides of the sealant film (size: 1 cm x 1 cm), and the sample was embedded in epoxy resin after a treatment to prevent peeling off of the sample from the epoxy resin.

The embedded sample was cut perpendicular to the film surface in a frozen state with a cryo-microtome set at -130°C to give an ultrathin section.

After the staining of the cross-section in the vapor of ruthenium tetroxide for 30 minutes, carbon was deposited on the cross-section, and the cross-section was observed and photographed with a transmission electron microscope (JEM2100, manufactured by JEOL Ltd.) at an acceleration voltage of 200 kV.

(Dynamic coefficient of friction)

The dynamic coefficient of friction between the film surfaces of the sealant films including polyethylene resin, was measured in accordance with JIS K 7125, except for the following conditions.

Environmental conditions: after 2 hours or longer of humidity control, measurement was conducted in an environment at 23°C and 50%RH.
Measurement apparatus: TENSILON STM-T-50BP, manufactured by Toyo Baldwin Co.
Measurement conditions: size of fixed test piece of 297 mm (longitudinal direction) x 105 mm (width direction)
Size of movable test piece: 70 mm (longitudinal direction) x 50 mm (width direction) Mass of load weight: 0.5 kg
Crosshead speed: 20 mm/min
Distance traveled: 100 mm or more
Calculation method: the dynamic coefficient of friction was calculated from an average test force over a stroke of 10 mm to 50 mm and a mass of load weight, according to the following equation.
Coefficient of friction = an average test force over a stroke of 10 mm to 40 mm per mass of load weight

(Static coefficient of friction)

The static coefficient of friction between the surfaces of the sealing layer of the sealant films including polyethylene resin, was measured in accordance with JIS P 8147, except for the following conditions.

Environmental conditions: after 2 hours or longer of humidity control, measurement was conducted in an environment at 23°C and 50%RH.
Measurement apparatus: friction Tester AN, manufactured by Toyo Seiki Seisaku-sho, Ltd.
Measurement conditions: size of test piece of 200 mm (longitudinal direction) x 100 mm (width direction)
Dimensions of load weight: 100 mm (longitudinal direction) x 60 mm (width direction) Mass of load weight: 1.0 kg
Inclination changing rate: 1.5 °/sec
Measurement method: after the first test piece was fixed to a slanted board and a load weight affixed with the other test piece was placed on the first test piece, the slanted board was started to incline at a constant speed. The tangent (tanθ) of the angle at which the load weight affixed with the test piece started to slide out was calculated to determine the static coefficient of friction. The measurement was repeated 3 times, and the average was determined.

(Degree of blocking)

The degree of blocking between the surfaces of the sealant layer of the sealant film was measured in accordance with ASTM D1893-67, except for the measurement conditions described below.
The surfaces to be measured were overlaid, and the sample (width direction: 10 cm, longitudinal direction: 15 cm) was placed on a heat pressing machine (type SA-303, manufactured by TESTER SANGYO CO, LTD). An aluminum plate (size: 7 cm x 7 cm, thickness: 2 mm) was placed at a position half in the width (10 cm) and 1 cm inside in the lengthwise direction (15 cm), to have aligned edges. The sample and the aluminum plate were subjected to a pressure treatment at 50°C and a pressure of 440 kgf7 cm$^2$ for 15 minutes.
The sample and the bar (diameter; 6 mm, material: aluminum) blocked through this pressure treatment were set to Autograph (type: UA-3122, manufactured by Shimadzu Corporation), and the force at which the bar peeled off from the blocking area at a speed of 100 m/min was measured.
In this case, the bar and the peeling surface should be horizontal. The degree of blocking was determined by the average of 4 measurements per sample.

(Easy-peelability)

The easy-peelability was defined by the strength of easy-peelability by sealing at 190°C. The strength of 20 mN/15mm or less was judged to be "Very Good", the strength of 30 mN/15mm or less was judged to be "Good", and the strength more than 30 mN/15mm was judged to be "Bad".

(Strength of easy-peelability: mN/15mm)

An adhesive for dry lamination (TM569, CAT-10L, manufactured by Toyo-Morton, Ltd.) was applied to the corona-treated surface of a nylon film (N1100, 15 μm, biaxially stretched nylon film, manufactured by TOYOBO CO., LTD.) so that the solids content became 3 g/m$^2$. The solvent was removed by volatilization with an oven set at 80°C. The corona-treated surface of the sealant film and the adhesive-applied surface of the nylon film was laminated by nipping on temperature-controlled rolls set at 60°C. The laminated film was aged at 40°C for 2 days to prepare a laminate film.
On the sealant surface of the laminated film, an unstretched CPP sheet consisting of 100 weight% of propylene-ethylene random copolymer (WF577PG, thickness: 300 μm, manufactured by SUMITOMO CHEMICAL COMPANY, LIMITED) was stacked, and heat-sealed with a sealing width of 15 mm at a sealing pressure of 0.2 MPa for sealing time of 1.0 second, and at sealing temperatures of 150, 190°C, and 200°C respectively. A test piece was prepared from the heat-sealed laminate such that the test piece had 15 mm of width, parallel to the longitudinal direction of the laminate.
The test pieces were set to Autograph (type: UA-3122, manufactured by Shimadzu corporation), then sealed surfaces were peeled off at a speed of 200 mm/min, and the maximum value was measured. Three samples were measured at each sealing temperature, and the average was determined as the strength of easy-peelability at each sealing temperature.

(Peeling strength (Sealing strength) : mN/15mm)

An adhesive for dry lamination (TM569, CAT-10L, manufactured by Toyo-Morton, Ltd.) was applied to the corona-treated surface of a nylon film (N1100, 15 $\mu$m, biaxially stretched nylon film, manufactured by TOYOBO CO., LTD.) so that the solids content became 3 g/m$^2$. The solvent was removed by volatilization with an oven set at 80°C. The corona-treated surface of the sealant film and the adhesive-applied surface of the nylon film was laminated by nipping on temperature-controlled rolls set at 60°C. The laminated film was aged at 40°C for 2 days to prepare a laminate film.

The laminate film was heat-sealed so that the longitudinal direction of the film became aligned and the sealant films face each other with a sealing width of 15 mm at a sealing pressure of 0.2 MPa, 0.4 MPa, and 0.6 MPa, for a sealing time of 1.0 second, and at sealing temperatures of 150, 190°C, and 200°C, respectively. A test piece was prepared from the heat-sealed laminate such that the test piece had 15 mm of width, parallel to the longitudinal direction of the laminate.

The test pieces were set to Autograph (type: UA-3122, manufactured by Shimadzu corporation), then sealed surfaces were peeled off at a speed of 200 mm/min, and the maximum value was measured. Three samples were measured at each sealing temperature, and the average was determined as the peeling strength (sealing strength) at each sealing temperature.

The following raw materials were used in Examples and Comparative Examples.

(Polypropylene resin)

    (1) WF577PG (ethylene copolymerized polypropylene, MFR: 3.2 g/10min, melting point: 142°C, manufactured by SUMITOMO CHEMICAL COMPANY, LIMITED)
    (2) EP3721 (propylene/ethylene block copolymer, MFR: 2.5 g/10min, melting point: 143°C, manufactured by SUMITOMO CHEMICAL COMPANY, LIMITED)

(Polyethylene resin)

    (1) F222 (low density polyethylene, density: 922 kg/m$^3$, MFR: 2.0 g/lOmin, melting point: 110°C, manufactured by Ube-Maruzen Polyethlene Co., Ltd.)
    (2) FV407 (metallocene linear low-density polyethylene, density: 930 kg/m$^3$, MFR 3.2 g/10min, melting point: 124°C, manufactured by SUMITOMO CHEMICAL COMPANY, LIMITED)
    (3) A-4070S (ethylene/$\alpha$-olefin copolymer, density: 870 kg/m$^3$, MFR: 3.6 g/lOmin, melting point: 55°C, manufactured by Mitsui Chemicals, Inc.)
    (4) A-1085S (ethylene/$\alpha$-olefin copolymer, density: 885 kg/m$^3$, MFR: 1.2 g/lOmin, melting point: 66°C, manufactured by Mitsui Chemicals, Inc.)
    (5) RS1405 (mixture of ethylene/$\alpha$-olefin copolymer, manufactured by Mitsui Chemicals, Inc.)
    (6) P0480 (ethylene/a-olefin copolymer, MFR: 1.8 g/10min, manufactured by Mitsui Chemicals, Inc)
    (7) G501 (silicone grease, manufactured by Shin-Etsu Chemical Co., Ltd.)

(Silicon containing polyolefin resin)

    (1) Exfola PP2000 (content of silicon containing polyolefin (olefin/silicone copolymer): 30 weight%, content of polypropylene: 70 weight%, density: 917 kg/m$^3$, MFR: 20 g/lOmin, melting points: 125°C and 160°C, manufactured by Mitsui Fine Chemicals,Inc)
    (2) Exfola PE3027 (content of silicon containing polyolefin (olefin/silicone copolymer): 30 weight%, content of low density polyethylene: 70 weight%, density: 932 kg/m$^3$, MFR: 30 g/lOmin, melting points: 114°C and 122°C, manufactured by Mitsui Fine Chemicals,Inc)
    (3) Exfola LL1513 (content of silicon containing polyolefin (olefin/silicone copolymer): 30 weight%, content of metallocene linear low-density polyethylene: 70 weight%, density: 921 kg/m$^3$, MFR: 15 g/10min, melting points: 102°C and 121°C, manufactured by Mitsui Fine Chemicals,Inc)

(Particles consisting of inorganic oxide)

Mixed pellet (MB) of (1) to (3): (1)/(2)/(3)=90/6/4 (weight%).

(1) WF577PG (ethylene copolymerized polypropylene)

(2) KMP-130-10 (spherical silica particles, weight-average particle size: 10 $\mu$m, manufactured by Shin-Etsu Chemical Co., Ltd.)

(3) KMP-130-4 (spherical silica particles, weight-average particle size: 4 $\mu$m, manufactured by Shin-Etsu Chemical Co., Ltd.)

(Organic lubricant)

(1) MS07 (propylene/ethylene random copolymer containing 5 weight% of erucamide, manufactured by SUMITOMO CHEMICAL COMPANY, LIMITED)

(Examples 1 to 12)

Polypropylene resin, polyethylene resin, silicon containing polyolefin, spherical silica particles, and erucamide were mixed and melted in a twin screw extruder to form the sealing layer including the raw materials at the content rate (weight%) shown in Table 1.

Polypropylene resin and erucamide were mixed and melted in a twin screw extruder to form the intermediate layer including the raw materials at the content rate (weight%) shown in Table 1.

Further, polypropylene resin was melted in a twin screw extruder to form the laminate layer, as shown in Table 1.

The melted resin compositions of each of the sealant layer, the resin composition of the intermediate layer, and the resin composition of the laminate layer were stacked with an apparatus for forming multilayered film, co-extruded from a T-die as a single melted multiple-layered sheet, and cooled and solidified by contacting with a cooling roll, to form an unstretched sheet.

After the surface of the laminate layer of the sheet was subjected to corona discharge treatment, the sheet was wound into a roll at 20 m/min, to give a sealant film with a thickness of 60 $\mu$m and a wetting tension of the surface of the laminate layer of 45 N/m. Detailed conditions are as follows.

Diameter of extruder for sealant layer: 60 mm
Diameter of extruder for intermediate layer: 90 mm
Diameter of extruder for laminate layer: 45 mm
Melting temperature for mixing of raw materials for sealant layer, intermediate layer, and laminate layer: 250°C
Width of T-die: 1600 mm
Taking-up speed of melted multiple-layered sheet: 20 m/min
Cooling roll temperature: 40°C
Thickness of sealant layer in sealant film: 6 $\mu$m
Thickness of intermediate layer in sealant film: 42 $\mu$m
Thickness of laminate layer in sealant film: 12 $\mu$m
The longitudinal direction indicates the direction to which the unstretched sheet is conveyed, and the width direction indicates orthogonal direction to it. Table 2 shows characteristics of the produced film

The sealant film produced in Examples 1 to 13 had high liquid repellency and high heat sealability, as well as high easy-peelability.

In addition, deposition of the compounds from the resin composition for the sealing was little, and the film had high processability for film formation. This is because the silicon containing polyolefin for the sealing layer has low surface energy due to its dimethylpolysiloxane component and is segregated on the surface of the sealing layer.

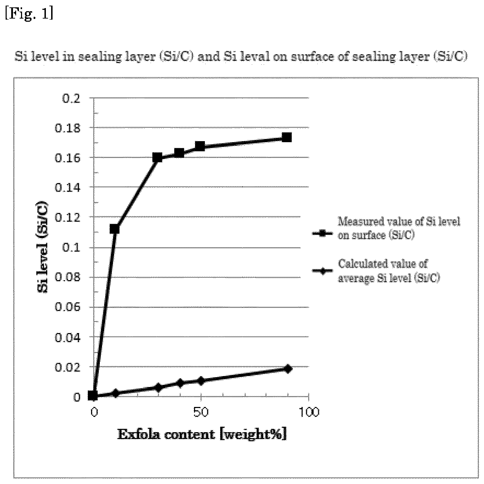

Figure 1 shows the average Si level and the surface Si level of the films of Comparative Examples 1 and 4, and Examples 2 to 4 and 13. In the Si levels of the films of Comparative Example 7 and Examples 2 to 4, the Si level on the surface of the sealing layer is 46.5 times as high as the average Si level of the entire sealing layer at maximum, leading to segregation of the silicon containing polyolefin on the surface.

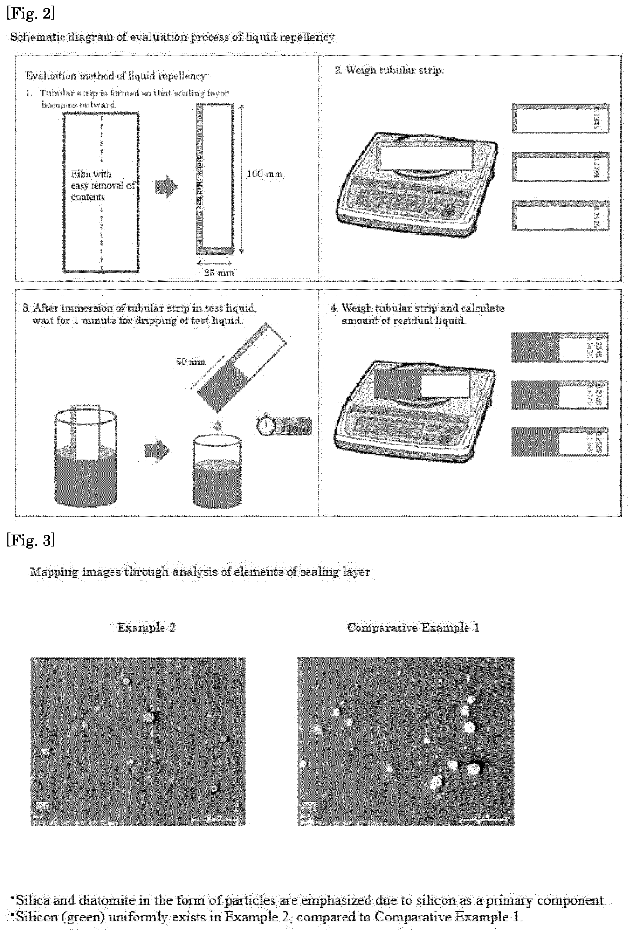

Figure 3 shows the resultant mapping image through analysis of silicon on the surface of the sealing layer of Example 2 and Comparative Example 1. The silicon displayed in green exists over the entire surface in Example 2; however, it is not observed in Comparative Example 1. Silica in the form of particles strongly colored due to its primary component of silicon.

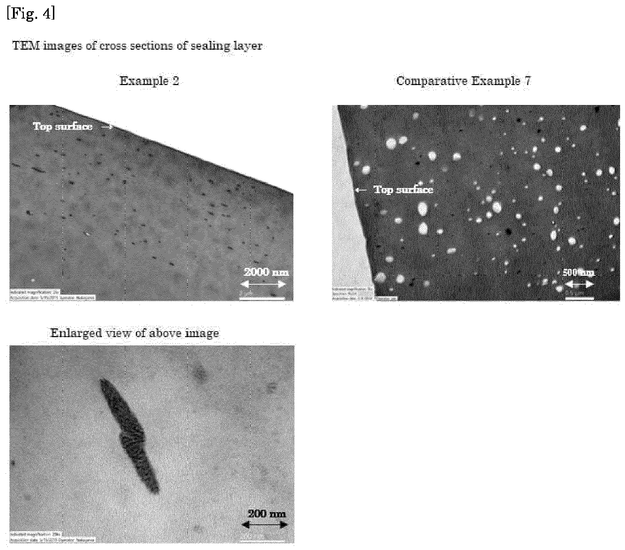

Figure 4 shows TEM observation images of the cross-sections of the sealing layers of Example 2 and Comparative Example 7. The silicon containing polyolefin of Example 2 is a copolymer of dimethylsiloxane and polyethylene. Dimethylsiloxane barely separates from polyethylene, leading to micro-phase separation structure, however, fine dispersion. In contrast, silicone resin is contained in Comparative Example 7, and it is thought that phase separation and deposition of the silicone resin are occurred.

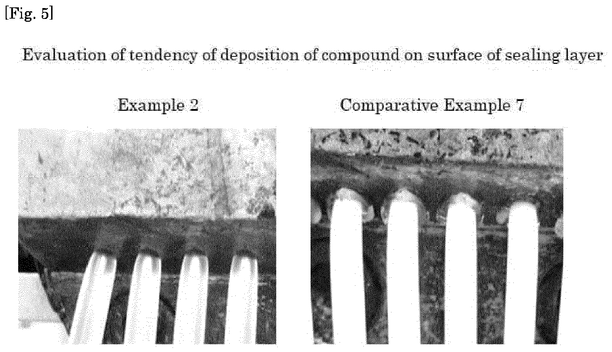

Figure 5 is a photograph of the area around the nozzle of a die after melt kneading of raw materials of Example 2 and Comparative Example 7 by twin screw extruder. In Example 2, the deposition of compound is not observed, and it is though that the deposition of the silicon containing polyolefin in the sealing layer is not occurred. In contrast, deposition of silicone resin is observed in Comparative Example 7, and this may cause foreign substance in the film and deterioration of working environment.

(Comparative Examples 1 to 7)

The sealant films were produced in the same manner as Example 1 except that the compounds shown in Table 1 were used as raw materials for the resin composition of the sealing layer, the laminate layer, and the intermediate layer.
The sealant film produced in Comparative Example 1 had low liquid repellency and inferior easy-peelability.
The sealant film produced in Comparative Example 2 had high liquid repellency, however had inferior easy-peelability.
The sealant film produced in Comparative Example 3 had low liquid repellency.
The sealant film produced in Comparative Example 4 had high liquid repellency, however, had inferior easy-peelability.
The sealant film produced in Comparative Example 5 had high liquid repellency, however, had inferior easy-peelability.
The sealant film produced in Comparative Example 6 had high liquid repellency, however, had inferior easy-peelability.
The sealant film produced in Comparative Example 7 had high liquid repellency, however, deposition of compound from the sealing layer occurred. The film was inferior as a sealant film. Since deposition of compound from the sealing layer occurred, strength of easy-peelability, peeling strength, dynamic coefficient of friction, static coefficient of friction, and blocking strength were not measured.

[Table 1]

[Table 2]

| | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|---|---|---|---|---|
| Sealing layer: raw materials and content (weight %) | WF577PG | 50 | 40 | 50 | 60 | 40 | 50 | 10 | 10 | 10 | 10 | 10 | 10 | 40 | 90 | 40 | 60 | 80 | 60 | 20 | 80 |
| | Exfola PP2000 | | | | | | | | | | | | | | | 50 | | | | 50 | |
| | Exfola PE3027 | 50 | 50 | 40 | 30 | | | 50 | 50 | 50 | 50 | 50 | 50 | 50 | | | | 10 | | | |
| | Exfola LL1513 | | | | | 50 | 40 | | | | | | | | | | | | 30 | | |
| | G-501 | | | | | | | | | | | | | | | | | | | | 10 |
| | F222 | | | | | | | 30 | | | | | | | | | 30 | | | | |
| | FV407 | | | | | | | | 30 | | | | | | | | | | | 20 | |
| | A-4070S | | | | | | | | | 30 | | | | | | | | | | | |
| | A-1085S | | | | | | | | | | 30 | | | | | | | | | | |
| | RS1406 | | | | | | | | | | | 30 | | | | | | | | | |
| | P0480 | | | | | | | | | | | | 30 | | | | | | | | |
| | Mixture of KMP-180-10, PMP180-4, and WF577PG | 0 | 8 | 8 | 8 | 8 | 8 | 8 | 8 | 8 | 8 | 8 | 8 | 8 | 8 | 8 | 8 | 8 | 8 | 8 | 8 |
| | MS07 | 0 | 2 | 2 | 2 | 2 | 2 | 2 | 2 | 2 | 2 | 2 | 2 | 2 | 2 | 2 | 2 | 2 | 2 | 2 | 2 |
| | Polypropylene resin | 50 | 47.9 | 57.9 | 67.9 | 47.9 | 50.9 | 52.9 | 52.9 | 52.9 | 52.9 | 52.9 | 52.9 | 35.9 | 97.9 | 82.9 | 67.9 | 87.9 | 67.9 | 59.9 | 87.9 |
| | Polyethylene resin | 35 | 35 | 28 | 21 | 35 | 35 | 30 | 30 | 30 | 30 | 30 | 30 | 35 | 0 | 0 | 30 | 7 | 21 | 20 | 0 |
| | Silicon containing polyolefin resin | 15 | 15 | 12 | 9 | 15 | 12 | 15 | 15 | 15 | 15 | 15 | 15 | 27 | 0 | 15 | 0 | 3 | 9 | 18 | 10 |
| | Silicone resin | 0 | 0 | 0 | 0 | 0 | 0 | 0 | 0 | 0 | 0 | 0 | 0 | 0 | 0 | 0 | 0 | 0 | 0 | 0 | 0 |
| | Silica | 0 | 1.52 | 1.52 | 1.52 | 1.52 | 1.52 | 1.52 | 1.52 | 1.52 | 1.52 | 1.52 | 1.52 | 1.52 | 1.52 | 1.52 | 1.52 | 1.52 | 1.52 | 1.52 | 1.52 |
| | Diatomite | 0 | 0.48 | 0.48 | 0.48 | 0.48 | 0.48 | 0.48 | 0.48 | 0.48 | 0.48 | 0.48 | 0.48 | 0.48 | 0.48 | 0.48 | 0.48 | 0.48 | 0.48 | 0.48 | 0.48 |
| | Erucamide | 0 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 |
| | Ethylenebisoleamide | 0 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 |
| Intermediate layer: raw materials and content (weight %) | WF577PG | 60 | 60 | 60 | 60 | 60 | 60 | 60 | 60 | 60 | 60 | 60 | 60 | 60 | 60 | 60 | 60 | 60 | 60 | 60 | 60 |
| | EP3721 | 39 | 39 | 39 | 39 | 39 | 39 | 39 | 39 | 39 | 39 | 39 | 39 | 39 | 39 | 39 | 39 | 39 | 39 | 39 | 39 |
| | MS07 | 1 | 1 | 1 | 1 | 1 | 1 | 1 | 1 | 1 | 1 | 1 | 1 | 1 | 1 | 1 | 1 | 1 | 1 | 1 | 1 |
| Laminate layer: raw materials and content (weight %) | WF577PG | 100 | 100 | 100 | 100 | 100 | 100 | 100 | 100 | 100 | 100 | 100 | 100 | 100 | 100 | 100 | 100 | 100 | 100 | 100 | 100 |
| Thicknesses of layer (μm) | Sealing layer/intermediate layer/laminate layer | 6/42/12 | 6/42/12 | 6/42/12 | 6/42/12 | 6/42/12 | 6/42/12 | 6/42/12 | 6/42/12 | 6/42/12 | 6/42/12 | 6/42/12 | 6/42/12 | 6/42/12 | 6/42/12 | 6/42/12 | 6/42/12 | 6/42/12 | 6/42/12 | 6/42/12 | 6/42/12 |

| | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|---|---|---|---|
| Calculated value of average Si level (Si/C) | 0.011 | 0.011 | 0.009 | 0.006 | 0.011 | 0.009 | 0.011 | 0.011 | 0.012 | 0.012 | 0.012 | 0.012 | 0.018 | 0.000 | 0.012 | 0.000 | 0.002 | 0.006 | 0.012 | 0.030 |
| Measured value of Si level on surface (Si/C) | 0.168 | 0.167 | 0.162 | 0.159 | 0.167 | 0.162 | 0.159 | 0.159 | 0.162 | 0.155 | 0.155 | 0.154 | 0.173 | 0.000 | 0.167 | 0.000 | 0.112 | 0.146 | 0.162 | 0.157 |
| Measured value of Si level on surface (Si/C)/calculated value of average Si level (Si/C) | 16 | 16 | 18 | 26 | 16 | 18 | 15 | 15 | 13 | 12 | 13 | 13 | 9 | — | 13 | — | 47 | 24 | 13 | 5 |
| Arithmetic average roughness Ra (μm) | 0.02 | 0.07 | 0.07 | 0.07 | 0.07 | 0.07 | 0.07 | 0.07 | 0.07 | 0.07 | 0.07 | 0.07 | 0.07 | 0.07 | 0.07 | 0.07 | 0.07 | 0.07 | 0.08 | 0.07 |
| Maximum height of profile Rz (μm) | 1.66 | 4.38 | 4.83 | 4.77 | 5.13 | 5 | 5.2 | 4.6 | 4.4 | 4.66 | 4.8 | 5.01 | 5 | 5.03 | 4.82 | 4.88 | 4.56 | 4.84 | 4.79 | 4.68 |
| Young's modulus (longitudinal direction) (MPa) | 330 | 330 | 330 | 330 | 320 | 330 | 330 | 330 | 330 | 320 | 330 | 330 | 330 | 330 | 330 | 330 | 330 | 330 | 330 | 330 |
| Young's modulus (width direction) (MPa) | 330 | 350 | 330 | 340 | 330 | 330 | 330 | 330 | 330 | 330 | 330 | 330 | 330 | 330 | 340 | 330 | 330 | 330 | 330 | 330 |
| Haze (%) | 13.3 | 13.3 | 13.4 | 13.5 | 13.3 | 13.4 | 13.3 | 13.3 | 13.2 | 13.2 | 13.2 | 13.2 | 13.2 | 13.7 | 13.3 | 13.6 | 13.6 | 13.5 | 13.3 | 13.3 |
| Liquid repellency (Very Good, Good, Bad) | Good | Good | Good | Good | Good | Good | Good | Good | Very Good | Very Good | Very Good | Very Good | Very Good | Bad | Good | Bad | Good | Good | Very Good | Good |
| Residual liquid (Cooking oil) (g/28cm²) | 0.02 | 0.016 | 0.027 | 0.03 | 0.015 | 0.02 | 0.02 | 0.025 | 0.03 | 0.017 | 0.016 | 0.023 | 0.023 | 0.125 | 0.02 | 0.13 | 0.04 | 0.027 | 0.03 | 0.04 |
| Residual liquid (Japanese salad dressing) (g/28cm²) | 0.07 | 0.069 | 0.072 | 0.078 | 0.078 | 0.074 | 0.077 | 0.066 | 0.06 | 0.061 | 0.061 | 0.064 | 0.064 | 0.117 | 0.07 | 0.12 | 0.09 | 0.081 | 0.06 | 0.08 |
| Residual liquid (Worcester sauce) (g/28cm²) | 0.11 | 0.111 | 0.142 | 0.128 | 0.111 | 0.109 | 0.114 | 0.141 | 0.05 | 0.057 | 0.04 | 0.038 | 0.038 | 0.143 | 0.11 | 0.14 | 0.13 | 0.117 | 0.05 | 0.13 |
| Easy-peelability (Very Good, Good, Bad) | Very Good | Very Good | Very Good | Very Good | Very Good | Very Good | Very Good | Very Good | Very Good | Good | Good | Very Good | Very Good | Bad | Bad | Very Good | Bad | Bad | Bad | — |
| Strength of easy-peelability (at 150°C) (mN/15mm) | 5 | 5 | 7 | 9 | 5 | 12 | 7 | 9 | 8 | 12 | 10 | 9 | 5 | 15 | 0 | 7 | 20 | 16 | 16 | — |
| Strength of easy-peelability (at 190°C) (mN/15mm) | 10 | 10 | 12 | 18 | 11 | 19 | 11 | 15 | 15 | 24 | 22 | 17 | 9 | 50 | 49 | 13 | 38 | 38 | 35 | — |
| Strength of easy-peelability (at 200°C) (mN/15mm) | 12 | 11 | 13 | 22 | 13 | 20 | 11 | 16 | 18 | 27 | 26 | 20 | 10 | 55 | 50 | 15 | 40 | 38 | 38 | — |
| Peeling strength at 150°C and 0.2 MPa (N/15mm) | 1 | 1 | 2 | 4 | 1 | 8 | 1 | 2 | 5 | 9 | 7 | 6 | 1 | 50 | 3 | 2 | 5 | 15 | 5 | — |
| Peeling strength at 190°C and 0.2 MPa (N/15mm) | 2 | 2 | 4 | 6 | 2 | 17 | 2 | 8 | 8 | 12 | 9 | 7 | 2 | 60 | 48 | 4 | 30 | 30 | 14 | — |
| Peeling strength at 200°C and 0.2 MPa (N/15mm) | 2 | 2 | 4 | 6 | 2 | 17 | 2 | 8 | 8 | 12 | 9 | 7 | 2 | 60 | 50 | 4 | 50 | 35 | 20 | — |
| Peeling strength at 150°C and 0.4 MPa (N/15mm) | 1 | 1 | 2 | 4 | 1 | 9 | 1 | 4 | 5 | 9 | 7 | 6 | 1 | 50 | 3 | 2 | 5 | 15 | 5 | — |
| Peeling strength at 190°C and 0.4 MPa (N/15mm) | 2 | 2 | 4 | 6 | 2 | 18 | 2 | 8 | 8 | 12 | 9 | 7 | 2 | 62 | 47 | 4 | 33 | 31 | 14 | — |
| Peeling strength at 200°C and 0.4 MPa (N/15mm) | 2 | 2 | 4 | 6 | 2 | 18 | 2 | 8 | 8 | 12 | 9 | 7 | 2 | 65 | 48 | 4 | 50 | 35 | 19 | — |
| Peeling strength at 150°C and 0.6 MPa (N/15mm) | 1 | 1 | 2 | 4 | 1 | 8 | 1 | 2 | 5 | 9 | 7 | 6 | 1 | 50 | 3 | 2 | 5 | 15 | 5 | — |
| Peeling strength at 190°C and 0.6 MPa (N/15mm) | 2 | 2 | 4 | 6 | 2 | 16 | 2 | 8 | 8 | 13 | 9 | 7 | 2 | 61 | 48 | 4 | 30 | 30 | 14 | — |
| Peeling strength at 200°C and 0.6 MPa (N/15mm) | 2 | 2 | 4 | 6 | 2 | 16 | 2 | 8 | 8 | 13 | 9 | 7 | 2 | 61 | 50 | 4 | 51 | 36 | 20 | — |
| Dynamic coefficient of friction (sealing layer/sealing layer) | 0.2 | 0.14 | 0.14 | 0.14 | 0.14 | 0.14 | 0.14 | 0.14 | 0.18 | 0.18 | 0.18 | 0.18 | 0.1 | 0.37 | 0.14 | 0.36 | 0.19 | 0.14 | 0.18 | — |
| Dynamic coefficient of friction (sealing layer/laminate layer) | 0.33 | 0.28 | 0.27 | 0.28 | 0.27 | 0.27 | 0.27 | 0.27 | 0.26 | 0.26 | 0.25 | 0.27 | 0.2 | 0.4 | 0.28 | 0.41 | 0.32 | 0.28 | 0.26 | — |
| Static coefficient of friction (sealing layer/sealing layer) | 0.3 | 0.2 | 0.2 | 0.2 | 0.2 | 0.2 | 0.2 | 0.2 | 0.2 | 0.2 | 0.2 | 0.2 | 0.1 | 0.8 | 0.2 | 0.8 | 0.3 | 0.3 | 0.2 | — |
| Blocking strength (mN/70mm) | 45 | 45 | 46 | 47 | 45 | 46 | 45 | 45 | 65 | 65 | 64 | 63 | 37 | 97 | 45 | 95 | 50 | 47 | 60 | — |
| Tendency of deposition of compounds from sealing layer (Good, Bad) | Good | Good | Good | Good | Good | Good | Good | Good | Good | Good | Good | Good | Good | — | Good | — | Good | Good | Good | Bad |

(Film characteristics)

INDUSTRIAL APPLICABILITY

The sealant film of the present invention provides the packaging bag that enables easy removal of sticky contents such as paste and viscous products, and also provides the sealant film with high heat sealability and high easy-peelability, and the laminate comprising the film. The contribution of the film to industry is significant.

**Claims**

1. A sealant film, comprising a sealing layer including a resin composition comprising (a) and (b), and satisfying the following (1) and (2):

   (a) a polypropylene resin,
   (b) a silicon containing polyolefin resin,

   (1) the ratio of a sealing strength at a sealing temperature of 200°C and a sealing pressure of 0.4 MPa to the sealing strength at a sealing temperature of 150°C and a sealing pressure of 0.4 MPa is 2 or less,
   (2) the sealing strength at a sealing temperature of 150°C and a sealing pressure of 0.6 MPa is 40 N/15mm or less.

2. The sealant film according to claim 1, wherein the silicon containing polyolefin is represented by the following formula:

$$CH_3\text{-}(CH_2)_{n\text{-}2}\text{-}CH_2\text{-}S_i(CH_3)_2O\text{-}(\text{-}S_i(CH_3)_2\text{-}O\text{-})_d\text{-}S_i(CH_3)_2\text{-}CH_2\text{-}(CH_2)_{n\text{-}2}\text{-}CH_3$$

   wherein, d is an integer of 1 or more.

3. The sealant film according to claim 1 or 2, wherein the resin composition further comprises particles consisting of an inorganic oxide or a synthetic resin.

4. The sealant film according to any one of claims 1 to 3, wherein the resin composition further comprises a fatty acid amide.

5. The sealant film according to any one of claims 1 to 3, satisfying the following (3) and (4):

   (3) the abundance ratio of a silicon atom $S_i$ to a carbon atom C (SJC) in the sealing layer is 0.001 or more and 0.02 or less,
   (4) the abundance ratio of a silicon atom $S_i$ to a carbon atom C (Si/C) on the surface of the sealing layer is 0.05 or more and 0.2 or less.

6. The sealant film according to any one of claims 1 to 5, satisfying the following (5):
   (5) the ratio of the abundance ratio of $S_i/C$ in the sealing layer to the abundance ratio Si/C on the surface of the sealing layer is 2 or more.

7. The sealant film according to any one of claims 1 to 6, wherein the surface of the sealing layer has a degree of blocking of 200 mN/70mm or less.

8. A laminate, comprising a substrate film and the sealant film according to any one of claims 1 to 7.

[Fig. 1]

Si level in sealing layer (Si/C) and Si leval on surface of sealing layer (Si/C)

[Fig. 2]

Schematic diagram of evaluation process of liquid repellency

| Evaluation method of liquid repellency | 2. Weigh tubular strip. |
|---|---|
| 1. Tubular strip is formed so that sealing layer becomes outward | |

Film with easy removal of contents

Double-sided tape

100 mm

25 mm

| 3. After immersion of tubular strip in test liquid, wait for 1 minute for dripping of test liquid. | 4. Weigh tubular strip and calculate amount of residual liquid. |
|---|---|

50 mm

1min

[Fig. 3]

Mapping images through analysis of elements of sealing layer

Example 2  Comparative Example 1

• Silica and diatomite in the form of particles are emphasized due to silicon as a primary component.
• Silicon (green) uniformly exists in Example 2, compared to Comparative Example 1.

[Fig. 4]

TEM images of cross sections of sealing layer

Example 2

Comparative Example 7

Enlarged view of above image

[Fig. 5]

Evaluation of tendency of deposition of compound on surface of sealing layer

Example 2                    Comparative Example 7

## INTERNATIONAL SEARCH REPORT

| International application No. |
|---|
| **PCT/JP2021/029666** |

### A. CLASSIFICATION OF SUBJECT MATTER

*C08J 5/18*(2006.01)i; *B32B 27/32*(2006.01)i; *B65D 65/40*(2006.01)i; *C08L 23/10*(2006.01)i; *C08L 83/10*(2006.01)i
FI:    C08J5/18; B32B27/32 Z; B65D65/40 D; C08L23/10; C08L83/10

According to International Patent Classification (IPC) or to both national classification and IPC

### B. FIELDS SEARCHED

Minimum documentation searched (classification system followed by classification symbols)

C08J5/18; B32B1/00-43/00; B65D65/40; C08L23/10; C08L83/10

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-50856 A (TOPPAN PRINTING CO LTD) 02 April 2020 (2020-04-02) claims, paragraphs [0029], [0046]-[0049], [0058]-[0060], examples 6-15, 53, 76-85 | 1-8 |
| A | JP 2018-123174 A (MITSUI CHEMICALS INC) 09 August 2018 (2018-08-09) claims, paragraph [0006], examples 1-4 | 1-8 |
| A | JP 2015-25051 A (DAINIPPON PRINTING CO LTD) 05 February 2015 (2015-02-05) claims, paragraphs [0006], [0022], examples 5-8, 10 | 1-8 |
| P, A | WO 2020/175260 A1 (TOYO BOSEKI) 03 September 2020 (2020-09-03) claims, paragraphs [0016], [0018]-[0020], [0040]-[0041], [0105]-[0110] | 1-8 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 October 2021** | **26 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/029666**

| Patent document cited in search report | | | Publication date (day/month/year) | Patent family member(s) | | | Publication date (day/month/year) |
|---|---|---|---|---|---|---|---|
| JP | 2020-50856 | A | 02 April 2020 | WO | 2020/059717 | A1 | |
| JP | 2018-123174 | A | 09 August 2018 | (Family: none) | | | |
| JP | 2015-25051 | A | 05 February 2015 | (Family: none) | | | |
| WO | 2020/175260 | A1 | 03 September 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000355362 A
- JP 2001048229 A
- JP H08337267 A
- JP 3539723 B
- JP 5990131 B
- JP 2014177541 A
- JP 2015024548 A
- JP 5394096 B
- JP 2014223752 A